# EUROPÄISCHE PATENTSCHRIFT

(11) **EP 0 704 009 B1**
(45) Veröffentlichungstag und Bekanntmachung des Hinweises auf die Patenterteilung: **31.03.1999**
(21) Anmeldenummer: 94912407.7
(22) Anmeldetag: 15.04.1994
(51) Int. Cl.: E01F 8/00

(54) **SCHUTZAUFBAU UND VERFAHREN ZU SEINER HERSTELLUNG**
PROTECTIVE STRUCTURE AND PROCESS FOR ITS PRODUCTION
STRUCTURE DE PROTECTION ET SON PROCEDE DE FABRICATION

(30) Priorität: 16.04.1993 AT 762/93
(43) Veröffentlichungstag der Anmeldung: 03.04.1996
(73) Patentinhaber: Lederbauer, Wolfgang, Dipl.-Ing. Dr., A-1010 Wien (AT)
(72) Erfinder: Lederbauer, Wolfgang, Dipl.-Ing. Dr., A-1010 Wien (AT)
(74) Vertreter: Wildhack, Helmut, Dipl.-Ing. Dr.
(86) Internationale Anmeldenummer: AT9400047
(87) Internationale Veröffentlichungsnummer: WO9424372

(56) Entgegenhaltungen:
- EP-A- 0 100 374
- EP-A- 0 265 419
- EP-A- 0 294 778
- EP-A- 0 319 512
- EP-A- 0 534 346
- WO-A-87/02399
- DE-A- 3 004 102
- DE-A- 3 512 066
- DE-A- 3 734 411
- DE-A- 4 030 270
- DE-A- 4 040 583
- DE-A- 4 119 355
- DE-U- 7 739 201
- BAUAUSSTELLUNG, Mai 1990, MüNCHEN Seiten 1 - 2, XP319422 LÜFT 'LUFT-Pflanzenwand'
- DATABASE WPI Week 89, 8. Dezember 1989 Derwent Publications Ltd., London, GB; AN 63-52733 YASUO TOZAWA 'noise insulation and earthquake-proof barrier' & JP,A,226 908 (TOYO JITSUGYO) 8. März 1988
- LAND+WATER, Bd.31, Nr.7/8, August 1991, OISTERWIJK NL Seiten 36 - 39, XP233097 P.L. SPITS 'met beton hoor je een stuk minder van wegverkeer'

## Beschreibung

Die Erfindung bezieht sich auf einen Schutzaufbau, welcher auf seinen beiden Seiten je zumindest ein Verkleidungselement aufweist, welches ein Traggerüst besitzt, an welchem zumindest einseitig offene Hohlkörper befestigt sind, wobei zumindest einige der von diesen Hohlkörpern gebildeten Hohlräume zumindest ein für den Wuchs einer Bepflanzung geeignetes Material enthalten, und wobei für die beiderseitigen Verkleidungselemente eine zwischen ihnen angeordnete, auf dem Boden aufliegende oder mit dem Boden verbundene Abstützung vorgesehen ist, deren normal zur Aufbauebene gemessene größte Breite größer ist als die in der gleichen Richtung gemessene Tiefe eines Verkleidungselementes, und wobei diese Abstützung zumindest teilweise aus schüttbarem Material besteht.

Ein derartiger Schutzaufbau ist bekannt (EP-A 273.911), wobei die Hohlkörper von Reifensektoren gebildet sind, die vorzugsweise gelocht sind. Der bekannte Schutzaufbau eignet sich gut für lärmschluckende Wände entlang von Verkehrswegen, für die Mittelstreifengestaltung von Autobahnen, Begrenzung von Parkflächen usw. In erster Linie dient ein solcher Schutzaufbau als Lärmschutz, jedoch auch zur Dämpfung des Aufpralles von Fahrzeugen, als Sichtschutz usw. Diese bekannten Schutzaufbauten haben sich für die erwähnten Verwendungszwecke sehr bewährt und bieten durch die Bepflanzung einen günstigen optischen Eindruck, wobei diese Bepflanzung, insbesondere die empfindlichen Wurzeln derselben, durch die Reifensektoren gegen Spritzwasser und andere schädliche Einflüsse geschützt wird, so daß die Bepflanzung, welche zumeist aus einer Begrünung besteht, eine lange Lebensdauer hat. Probleme entstehen beim bekannten Schutzaufbau jedoch dann, wenn keine starre Abstützung zwischen den beiderseitigen Verkleidungselementen angeordnet ist, welche die Verkleidungselemente bzw. deren Traggerüste hält. Je höher der Schutzaufbau wird, desto stärker macht sich dieses Problem bemerkbar. Zwar ist es aus der erwähnten Literaturstelle auch bekannt, die Abstützung teilweise aus schüttbarem Material auszubilden, wobei das gleiche Material verwendet wird, welches für die Ausfüllung der Hohlräume der Reifensektoren dient. Bei einer solchen Ausbildung läßt sich der Schutzaufbau aber nur mit einer sehr begrenzten Höhe ausbilden, welche oft nicht ausreicht. Der Nachteil wird dadurch bedingt, daß das schüttbare Material bei seiner Einfüllung zwischen die beiderseitigen Verkleidungselemente diese auseinander zu drücken trachtet. Ein solcher, auf die Verkleidungselemente nach außen gerichteter Druck entsteht bei höheren Schutzaufbauten auch durch den Auflagerdruckt der höheren Schichten. Die Stabilität eines solchen Schutzaufbaues ist daher in Frage gestellt, wenn der Schutzaufbau nicht sehr niedrig ist. Hinzu kommt noch die Anforderung, daß der Schutzaufbau häufig Belastungen standhalten soll, die beim Aufprall von Fahrzeugen od.dgl. entstehen.

Die Erfindung setzt sich zur Aufgabe, diese Nachteile zu vermeiden und einen Schutzaufbau der eingangs geschilderten Art so zu verbessern, daß auch bei großer Höhe des Schutzaufbaues eine einwandfreie Stabilität gegeben ist, welche auch Stoßbelastungen durch auffahrende Fahrzeuge od.dgl. aufzunehmen imstande ist. Zugleich soll aber die Möglichkeit gegeben werden, für eine solche Schutzwand solche Materialien zusätzlich zu den Sektoren der Altreifen zu verwenden, welche bei ihrer Entsorgung Probleme bereiten. Beispiele für solche Problemstoffe sind: Kunststoffabfälle und gebrauchte Kunststoffgegenstände, Klärschlamm, Eisenbahnschienen, Glasvliesreste, kontaminierter Schotter von Eisenbahndämmen, gebrauchte Eisenbahnschwellen, Gülle, alte Skis und Skischuhe, Dosen aller Art, Nahrungsmittelbecher, abgespielte Tennisbälle usw.

Die Erfindung löst diese Aufgabe dadurch, daß zumindest das schüttbare Material der Abstützung zumindest einen Problemstoff enthält und daß in der Abstützung Verbindungselemente für die beidseitigen Verkleidungselemente angeordnet sind, die in das schüttbare Material eingebettet sind und mit den Verkleidungselementen derart verbunden sind, daß die beidseitigen Verkleidungselemente zumindest im Bodenbereich des Schutzaufbaues zugschlüssig miteinander verbunden sind, wobei die Verbindungselemente und/oder die Verkleidungselemente Problem material enthalten, das von Altreifen abweicht und aus dem starren Zustand seines Anfallens nicht oder nicht wesentlich verändert ist. Diese Verbindungselemente nehmen die entstehenden Zugbeanspruchungen auf, so daß sich die beidseitigen Verkleidungselemente nicht voneinander entfernen können, auch wenn - wie dies im rauhen Baubetrieb häufig der Fall ist - das schüttbare Material der Abstützung plötzlich und in großer Menge zwischen die Verkleidungselemente eingeschüttet wird. Damit wird gesichert, daß die beidseitigen Verkleidungselemente ihre Relativlage beim Einschütten des Materiales der Abstützung nicht oder nicht wesentlich ändern, so daß die vorausbestimmten Abmessungen des Schutzaufbaues beibehalten werden. Dies ist in vielen Fällen schon aus Stabilitätsgründen wichtig, vor allem aber dort, wo für die Anbringung des Schutzaufbaues nur ein begrenzter Platz - gemessen normal zur Längserstreckung des Schutzaufbaues - zur Verfügung steht. Mit anderen Worten: Die Frontseite des Schutzaufbaues behält exakt ihre vorbestimmte Lage bei. Dies gilt unabhängig davon, ob die von dem schüttbaren Material gebildete Hinterfüllung der Verkleidungselemente mehr oder weniger in diese eindringt. In allen Fällen ergibt sich durch die unteren Verkleidungselemente und die zwischen ihnen befindliche Abstützung ein stabiler Sockel, auf dem weitere Verkleidungselemente sowie die zwischen ihnen befindliche Abstützung aufgebracht werden können. Diese oberen Verkleidungselemente können in derselben Weise zugschlüssig miteinander verbunden sein, wie dies für die untersten Verkleidungselemente gilt. Es können daher die erfindungsgemäßen Schutzaufbauten eine beträchtliche Höhe aufweisen und - falls die örtlichen Gegebenheiten dies zulassen - auch eine entsprechend große Tiefe, gemessen normal zur Längserstreckung des Schutzaufbaues. Zugleich bietet aber die Erfindung den wesentlichen Vorteil, daß Problemstoffe in verhältnismäßig großen Mengen in einem solchen Schutzaufbau bzw. in dessen Abstützung untergebracht werden können, so daß das Problem der Entsorgung solcher Materialen entschärft wird. Die unterzubringenden Mengen an Problemstoffen sind - pro Längeneinheit des Schutzaufbaues gemessen - umso größer, je höher und je tiefer der Schutzaufbau ist. Das schüttbare Material für die Abstützung und für die Ausfüllung der Hohlräume der Hohlkörper kann, doch muß nicht, das gleiche sein; es ist zweckmäßig, das Schüttmaterial im ursprünglichen Zustand zu belassen, d.h. im Zustand, in welchem es anfällt, und nur gegebenenfalls untereinander zu mischen.

Ein weiterer Vorteil ist, daß Alt- bzw. Problemstoffe der verschiedensten Art verwendet werden können, ohne sie aus dem Zustand, in welchem sie anfallen, in einen anderen Zustand versetzen zu müssen. Es entfällt also im wesentlichen eine Zerstörung dieser Alt- bzw. Problemstoffe, in der Regel auch eine Zerteilung. Vorteilhaft ist auch, daß solche Altproblemstoffe unterschiedlichster Art in Kombination miteinander Verwendung finden können.

Der Vorschlag, Problemstoffe in der Abstützung eines Schutzaufbaues zu entsorgen, ist bekannt (EP-A-0,100.374). wobei auch eine zugschlüssige Verbindung zweier Seiten eines Schutzaufbaues zur Erhöhung der Stabilität desselben gegeben ist.

Wie bekannt, muß ein Schutzaufbau nicht an seinen beiden Seiten bepflanzbare Verkleidungselemente aufweisen. Die Erfindung bezieht sich daher auch auf die Verbesserung eines zumindest einseitig bepflanzbaren Schutzaufbaues, bei welchem an zumindest einer Seite einer starren, mit dem Boden verbundenen Abstützung zumindest ein Verkleidungselement vorgesehen ist, welches ein Traggerüst aufweist, an welchem zumindest einseitig offene Hohlkörper befestigt sind, wobei zumindest einige der von diesen Hohlkörpern gebildeten Hohlräume zumindest ein für den Wuchs einer Bepflanzung geeignetes Material enthalten. Hiebei besteht die erfindungsgemäße Lösung darin, daß zumindest im unteren Bereich der Abstützung die Verkleidungselemente im Abstand von der Abstützung angeordnet sind und daß der verbleibende Zwischenraum mit schüttbarem Material ausgefüllt ist, wobei zumindest dieses schüttbare Material zumindest einen Problemstoff enthält und daß in dieses schüttbare Material Verbindungselemente eingebettet sind, mit welchem zumindest im unteren Bereich der Abstützung zumindest ein Verkleidungselement in seinem unteren Bereich zugschlüssig mit der Abstützung verbunden ist, wobei die Verbindungselemente und/oder die Verkleidungselemente Problemmaterial enthalten, das von Altreifen abweicht und aus dem starren Zustand seines Anfallens nicht oder nicht wesentlich verändert ist. Während bei der zuerst erwähnten Grundvariante der vorliegenden Erfindung sich die beidseitigen Verkleidungselemente bzw. deren Traggerüste gegenseitig halten, erfolgt dies bei der zuletzt erwähnten Variante durch zugschlüssige Verbindung zwischen den Verkleidungselementen und der Abstützung, welche ja im vorliegenden Fall starr und mit dem Boden verbunden ist, so daß sich eine einwandfreie Verankerung der Verkleidungselemente ergibt. Dies kann an nur einer Seite der starren Abstützung der Fall sein, jedoch - falls die Gegebenheiten dies erfordern - auch an beiden Seiten derselben.

Gemäß einer Weiterbildung der Erfindung schließt die Abstützung einen bestehenden Aufbau, einen Hang, eine Böschung, einen Lärmschutz- oder Winderosionsdamm oder eine Uferböschung mit ein, wobei verbleibende Hohlräume mit Problemstoffmaterial und bzw. oder Abraum aus den bestehenden Aufbau ausgefüllt sind und der Anschluß des Schutzaufbaus mittels Zugankern erfolgt. Ein solcher bestehender Aufbau kann z.B. eine Wand oder ein Lawinenverbau sein. Dies ermöglicht es, den Schutzaufbau auch bei komplizierten natürlichen Gegebenheiten anzuwenden, also dort, wo der bekannte Schutzaufbau auch aus anderen Gründen als den angeführten Ursachen nicht anwendbar ist. Der Einschluß bestehender örtlicher Gegebenheiten erspart gegebenenfalls die Anordnung gesonderter Abstützungen bzw. den Abbruch bestehender Baulichkeiten. Dies erweitert das Anwendungsgebiet der erfindungsgemäßen Schutzaufbaue wesentlich und vergrößert damit die Möglichkeiten zur umweltschonenden Unterbringung bzw. Entsorgung von Problemstoffmaterialien, soferne diese nicht bestimmte umweltbelastende Eigenschaften aufweisen, z.B. strahlend sind oder umweltschädigende Flüssigkeiten in großen Mengen enthalten, z.B. Öl oder Säuren. Die Anwendung bei Hängen, Böschungen, Dämmen, Ufern usw. erfordert es, erfindungsgemäß die Abstützung mit zur Horizontalen geneigten, den Verkleidungselementen zugewendeten Begrenzungsflächen auszubilden, wobei auch die Verkleidungselemente geneigt angeordnet sind. Die erfindungsgemäße Ausbildung ermöglicht dies problemlos, ohne daß die eingangs geschilderten Nachteile auftreten. Bei Uferböschungen bilden die zugschlüssigen Verbindungselemente zugleich eine Sicherung dagegen, daß die Verkleidungselemente - z.B. bei Hochwasser - durch die Strömung mitgerissen werden. In den von den Hohlkörpern außenseitig gebildeten Nischen können - wenn diese Nischen unterhalb des Wasserspiegels liegen - Fische laichen oder Krebse hausen bzw. - wenn diese Nischen nicht wassergefährdet sind, Vögel nisten.

Zweckmäßig sind die im Rahmen der Erfindung zur Verwendung kommenden Hohlkörper von Reifensektoren und bzw. oder Dosen und bzw. oder Skischuhen gebildet, die vorzugsweise gelocht sind, wobei bei Reifensektoren die Lochung zweckmäßig an den Seitenflanken angeordnet ist.

Wenn oben von "Boden" gesprochen wurde, so ist dies nicht zwingend so zu verstehen, daß der Schutzaufbau unbedingt auf dem Erdboden aufruhen muß. Vielmehr kann er im Rahmen der Erfindung auch eine Aufstockung eines bestehenden Aufbaues bilden, z.B. eine Erhöhung eines bestehenden Walles, Dammes od.dgl. Die Anordnung der Verkleidungselemente auf den beiden Seiten der Abstützung muß nicht gleich sein, vielmehr können erfindungsgemäß diese Verkleidungselemente auf den beiden Seiten der Abstützung auf unterschiedlicher Höhe angeordnet sein, gegebenenfalls nur über einen Teil der Höhe der Abstützung. Es kann also die Anordnung der Verkleidungselemente auf der einen Seite der Abstützung sowohl hinsichtlich der Verteilung der Verkleidungselemente über die Fläche der Abstützung von der anderen Seite abweichen, als auch die Möglichkeit gegeben sein, die Verkleidungselemente auf der einen Seite der Abstützung nur über einen Teil der Höhe der Abstützung zu führen. Dieser Teil muß nicht unbedingt der bodennahe Teil der Abstützung sein.

Durch die große Stabilität des Schutzaufbaues läßt sich praktisch jedwede Querschnittsform des Schutzaufbaues erzielen. Besonders günstig ist eine treppenförmige Querschnittsgestalt, wobei die Erfindung die Möglichkeit gibt, die nach oben gerichteten Überflächenbereiche als Bewirtschaftungsflächen auszubilden. Diese Möglichkeit ergibt sich durch die Unterbringung schüttbaren Materiales beim erfindungsgemäßen Schutzaufbau, wobei dieses Material für Bewirtschaftungsflächen selbstverständlich geeignet sein muß, insbesondere Humus.

Die Erfindung beschränkt sich aber nicht auf die Unterbringung von Problemstoffen im schüttbaren Material der Abstützung. Vielmehr können auch erfindungsgemäß die Traggerüste der Verkleidungselemente und bzw. oder die Verbindungselemente zumindest einen Problemstoff enthalten, gegebenenfalls sogar von solchen Problemstoffen zur Gänze gebildet sein. Beispielsweise eignen sich gebrauchte Skis bzw. Surfboards, für die Verbindungselemente auch gebrauchte Stahlseile. Selbstverständlich können auch die Hohlkörper ganz oder teilweise von Problemartikeln aller Art, insbesondere Skischuhen, Dosen, Nahrungsmittelbechern usw. gebildet sein.

Gegebenenfalls kann sich das Erfordernis ergeben, die Abstützung zu verstärken. Dies kann aus statischen Gründen erforderlich werden, oder auch aus dem Erfordernis, besonders starke auf den Schutzaufbau einwirkende Kräfte aufnehmen zu können. Für solche Fälle ist es im Rahmen der Erfindung zweckmäßig, wenn die Abstützung starre Versteifungselemente enthält, vorzugsweise zumindest teilweise aus einem Material, welches zumindest einen Problemstoff enthält. Besonders zweckmäßig ist es für viele Anwendungsfälle, wenn diese starren Versteifungselemente die zu beiden Seiten des Schutzaufbaues angeordneten Verkleidungselemente drucksteif verbinden. Beispiele für solche Anwendungsfälle sind Fahrbahnbegrenzungen, an denen erfahrungsgemäß häufig Aufpralle stattfinden, oder aber Hangsicherungen, bei denen die Verkleidungselemente durch den Hang zusammengedrückt werden.

Im Rahmen der Erfindung kann es vorkommen, daß aus dem Material der Problemstoffe Substanzen ausgelöst werden, welche umweltschädigend wirken könnten. Um diese Substanzen. aufzufangen, ist gemäß einer besonders zweckmäßigen Ausführungsform der Erfindung unter der Abstützung eine Wanne aus dichtem korrosionsbeständigem Material vorgesehen, deren in Längsrichtung des Schutzaufbaues verlaufende Abschnitte an ihren Stoßstellen, vorzugsweise durch eine Profilierung, abgedichtet sind. Diese Wanne fängt die erwähnten, z.B. durch Regenwasser ausgeschwemmten, Substanzen auf und kann an bestimmten Stellen mit Ableitungen bzw. Auffangbehältern für diese Substanzen versehen sein.

Im Normalfall bilden die Hohlkörper der Verkleidungselemente eine genügend dichte Schicht, welche verhindert, daß das schüttbare Material der Abstützung bei seiner Einfüllung hinter die Verkleidungselemente durch diese bzw. durch die Zwischenräume zwischen benachbarten Hohlkörpern durchtritt. Es kann jedoch auch im Rahmen der Erfindung die Anordnung so getroffen sein, daß die Traggerüste der Verkleidungselemente eine Schalung für das schüttbare Material der Abstützung bilden, wobei vorzugsweise das Traggerüst auf der Innenseite mit einer das schüttbare Material von dem für den Wuchs der Bepflanzung dienenden Material trennenden Schicht, insbesondere einem Vlies, Netz od.dgl. versehen ist. Dies bildet nicht nur einen Vorteil für die Formung der vom schüttbaren Material der Abstützung gebildeten Masse, sondern vermeidet auch, daß sich das schüttbare Material mit dem Erdmaterial od.dgl. der Bepflanzung mischt und dadurch dessen Qualität beeinträchtigt. Es ergibt sich aber auch die Möglichkeit, durch die beiderseits der Schalung liegenden Materialien bestimmte Eigenschaften des Schutzaufbaues zu beeinflussen. Beispielsweise können die zu beiden Seiten der Schalung liegenden Höhlräume mit schüttbarem Material unterschiedlicher Beschaffenheit ausgefüllt sein, vorzugsweise an der Schallseite des Aufbaues mit schallabsorbierendem Material, z.B. geschäumtem Kunststoff, Steinwolle od.dgl.

In der Regel sind die Reifensektoren in natürlicher Form an dem Traggerüst befestigt. Dort, wo die normal zur Längserstreckung des Schutzaufbaues gemessene Tiefe desselben jedoch sehr gering gehalten werden soll, können im Rahmen der Erfindung an zumindest einem Traggerüst mehrere, vorzugsweise untereinander zusammenhängende, Reifensektoren flachgezogen am Traggerüst befestigt sein. Die Verwendung von Ganzreifen ist in Ausnahmefällen möglich, jedoch erschweren Ganzreifen ihre Hinterfüllung mit dem für den Wuchs der Bepflanzung geeigneten Material und erschweren auch die Durchwachsung des Schutzaufbaues durch die Begrünung.

Für das schüttbare Material eignen sich als Problemstoffe insbesondere Stahlabfälle, Kunststoffabfälle (vorzugsweise in zerkleinerter, insbesondere granulierter Form), Schaumstoffe, gepreßtes verklebtes Stroh, Glasfaservliesteile, Kompost, Klärschlamm, Gülle (vorzugsweise in getrockneter Form), Hochofenschlacke, Zellstoffabfälle, Gleisschotter, Holzschnitzel, Tonkugeln, Sand, Kies, Gras, Gesträuch, Häckselgut, Papier- oder Kartonabfälle, Gesteinsmehl, Lehm, Lavagestein, Asche, synthetische oder natürliche Fasern, Bodenaushubmaterial, Restbetonabfall, Tunnelausbruchmaterial, Bauschutt od.dgl. Dieses Material kann gegebenenfalls mit Zusätzen von Wachstumsverbesserern für den Wuchs der Bepflanzung, Feuchtigkeitspeichermitteln, Korrosionsschutzmitteln oder fäulnishemmenden Mitteln versehen sein, wobei eine wasserundurchlässige Schichte eine Trennung zwischen verschmutztem und nicht verschmitztem Schüttmaterial ermöglicht.

Als Problemstoffe in den Verstärkungselementen der Abstützung und bzw. oder in den Traggerüsten und bzw. oder in den Verbindungselementen können insbesondere Straßenbahn- und Eisenbahnschienen, Eisenbahnschwellen, ja sogar ganze Gleisabschnitte, Spundwände, Kunststoffprofile, insbesondere aus Recyclingkunststoff, Sportartikel (z.B.Ski, Surfboards, Tennisschläger), Holzteile, z.B. Telegrafen- oder Strommasten oder Abfallholz), in Formen verpreßte Leder- und Aluminiumabfälle, hohle ausgegossene Bauteile (z.B.Wellpappe), Glasvliesteile, Stahlseile, zerkleinertes und mit Klebemittel gebundenes Stroh, mit Kunstharzen gebundene Schaumstoffe und bzw. oder Kunststoffabfälle und bzw. oder Staub und bzw. oder Schlamm, gewellte Dachdeckungselemente, z.B. aus Asbestztement oder Glasvlies, dienen, vorzugsweise als bereits gebrauchte Produkte, wobei korrosionsfällige Materialien gegebenenfalls mit einer korrosionshemmenden Imprägnierung und bzw. oder Ummantelung versehen sind.

Die Erfindung bietet in besonders günstiger Weise die Möglichkeit, Werbeflächen oder -anlagen und bzw. oder Warnanlagen, z.B. für Geisterfahrer, und bzw. oder Überwachungsanlagen, z.B. Radargeräte, am bzw. im Schutzaufbau unterzubringen. Für Werbeflächen oder -anlagen gibt hierbei die Erfindung die vorteilhafte Möglichkeit, die Anordnung dieser Flächen oder Anlagen so zu wählen, daß sie nach einer vorbestimmten Zeit durch die Bepflanzung überwachsen werden. Dies ist aus optischen bzw. Umweltschutzgründen häufig erwünscht. In gleicher Weise besteht im Rahmen der Erfindung die Möglichkeit, daß zumindest einige Verkleidungselemente und bzw. oder einige Abschnitte von Abdeckungen an der Außenseite des Schutzaufbaues farblich gestaltet sind und bzw. oder durch entsprechende Anordnung Zeichen, z.B. Buchstaben, bilden, welche - gegebenenfalls in künstlerischer Gestaltung - Werbungen bilden, die gegebenenfalls durch die Bepflanzung überwachsbar sind. Eine weitere Möglichkeit besteht darin, daß die verwendeten Problemstoffe, z.B. Ski, Skischuhe, Getränkedosen usw., Aufschriften tragen und im Schutzaufbau so angeordnet sind, daß diese Aufschriften - zumindest für einige Zeit - aus Werbegründen sichtbar bleiben.

Auch das für den Wuchs der Bepflanzung geeignete Meterial kann im Rahmen der Erfindung Problemstoffe enthalten, z.B. Kompost, Gülle, Hochofenschlacke oder Schaumstoffteilchen.

Das erfindungsgemäße Verfahren zur Herstellung des Schutzaufbaues kennzeichnet sich dadurch, daß zumindest Teile des Schutzaufbaues, nämlich mit Traggerüsten versehene Vorsatzschalen, in fertigem Zustand an den Montageort geliefert werden. Zweckmäßig wird hiebei so vorgegangen, daß ganze Elemente des Schutzaufbaues mit Erde verfüllt, mit Pflanzen bestückt und im begrünten Zustand auf die Baustelle transportiert werden.

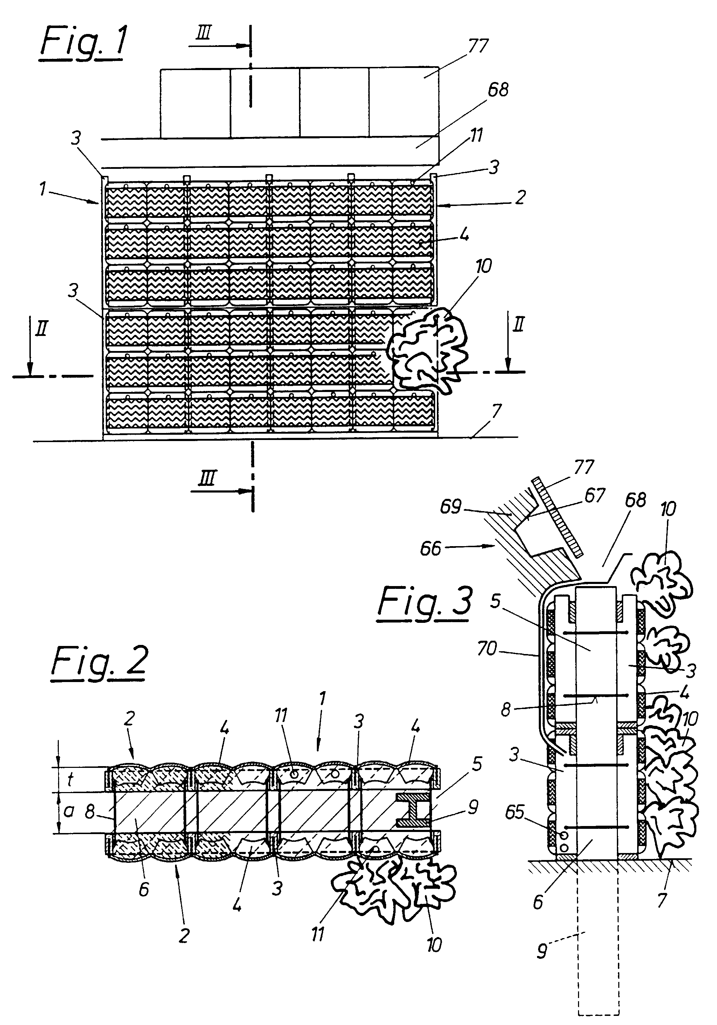

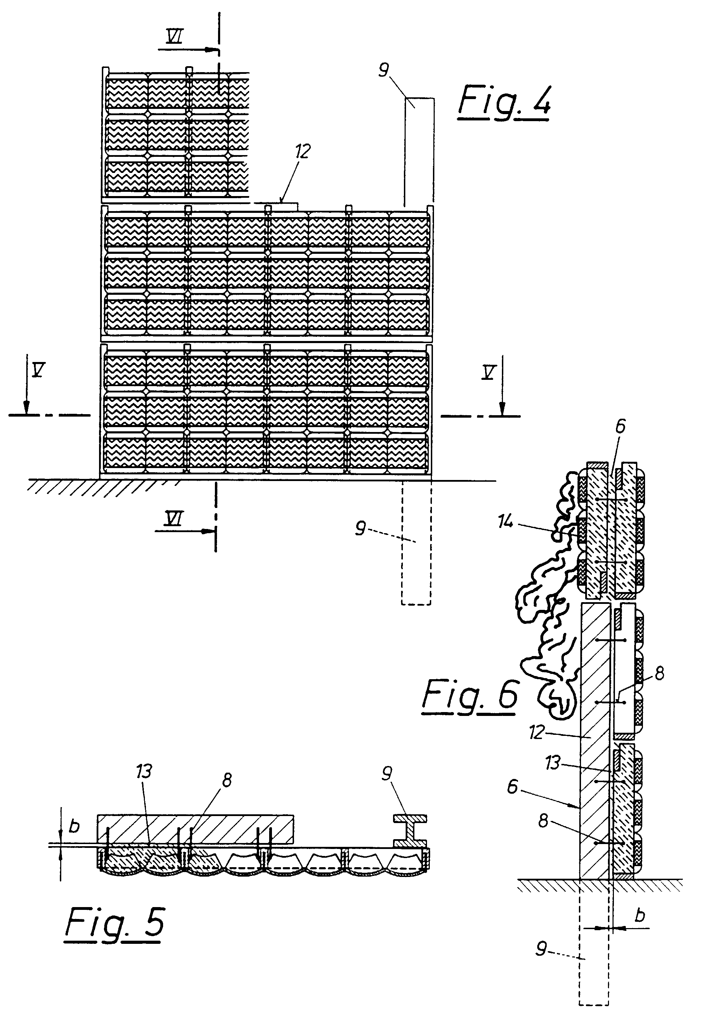

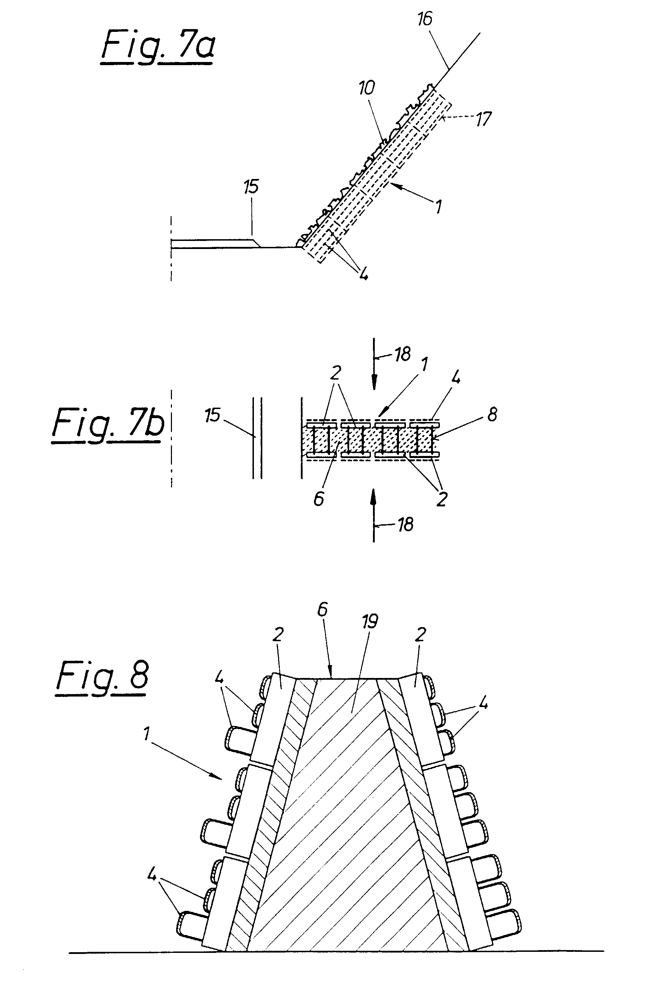

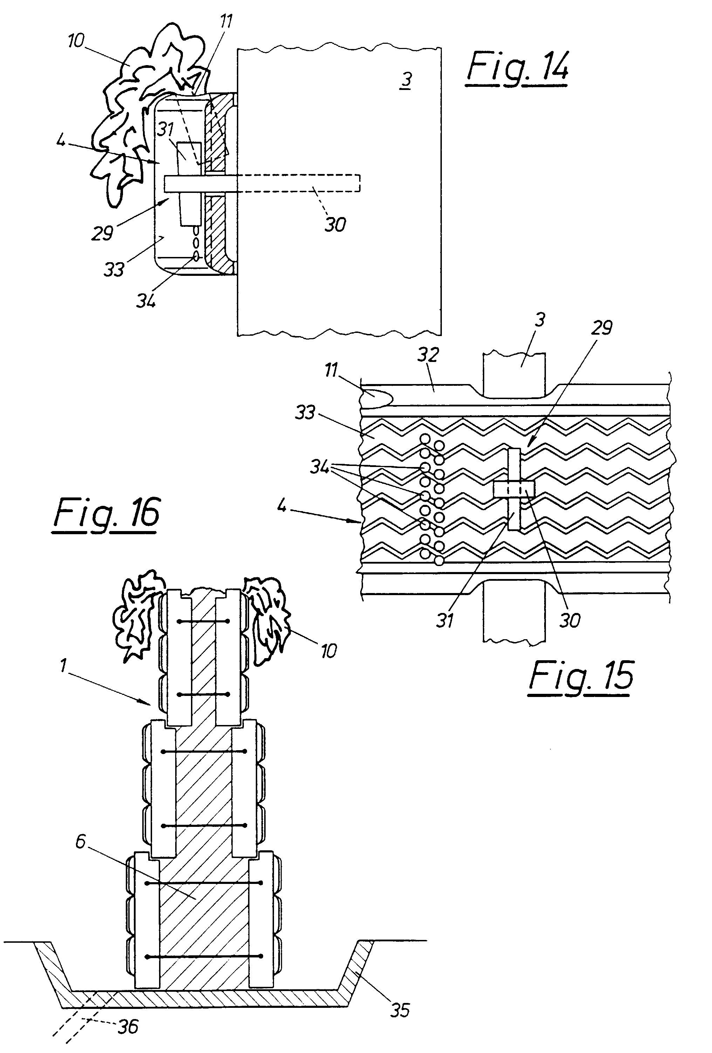

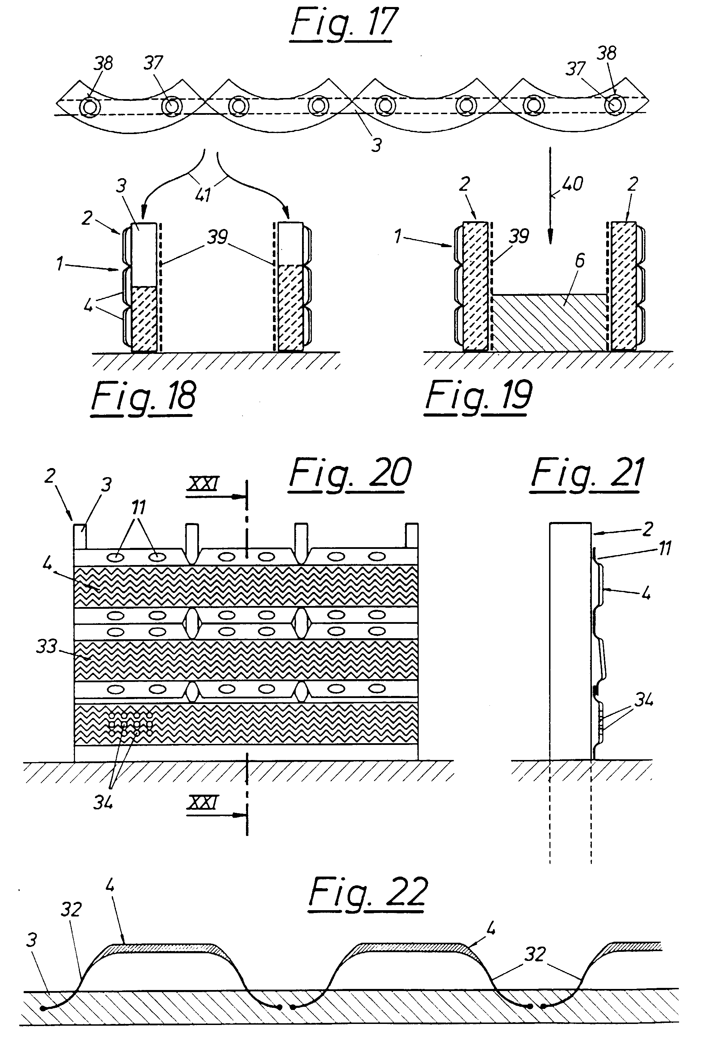

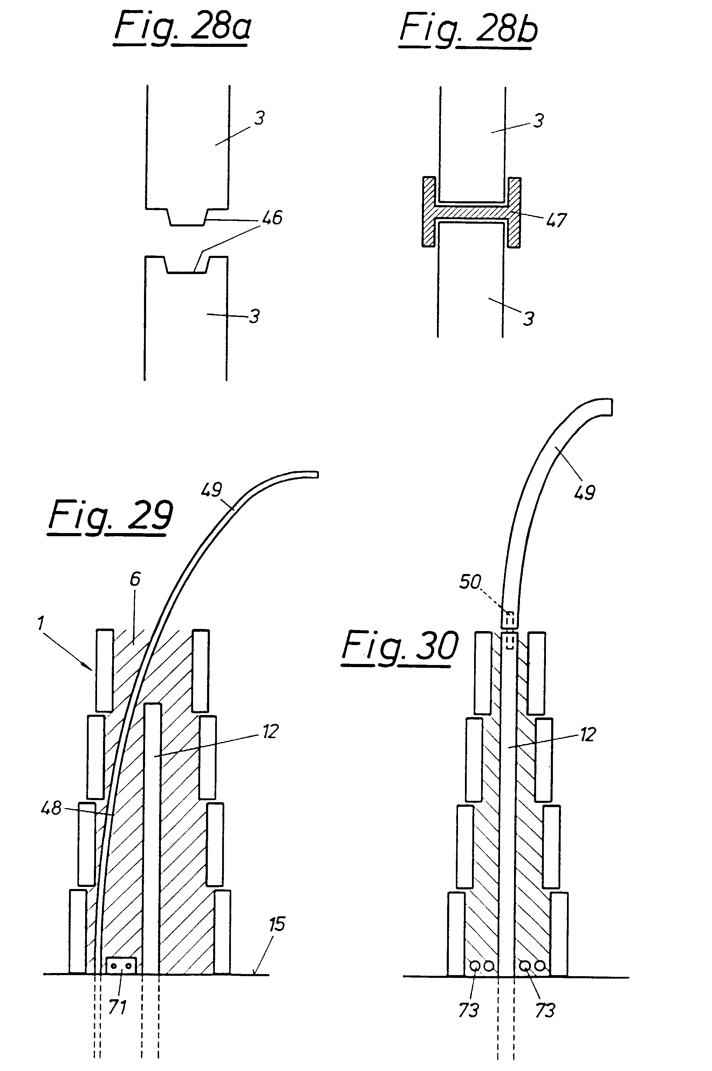

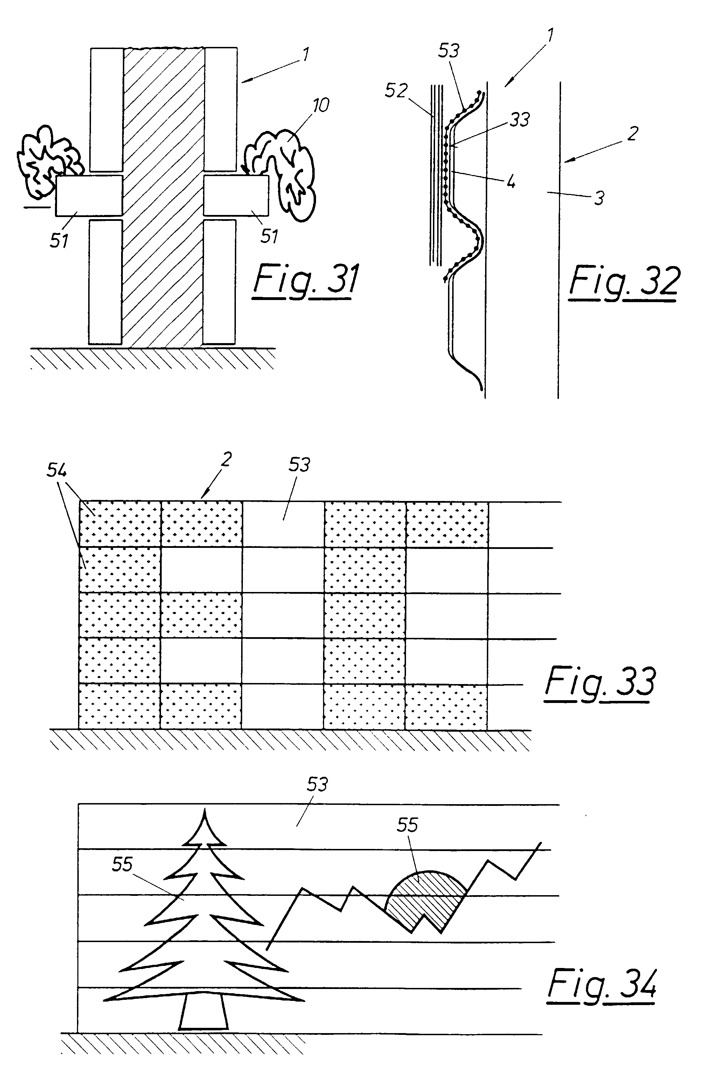

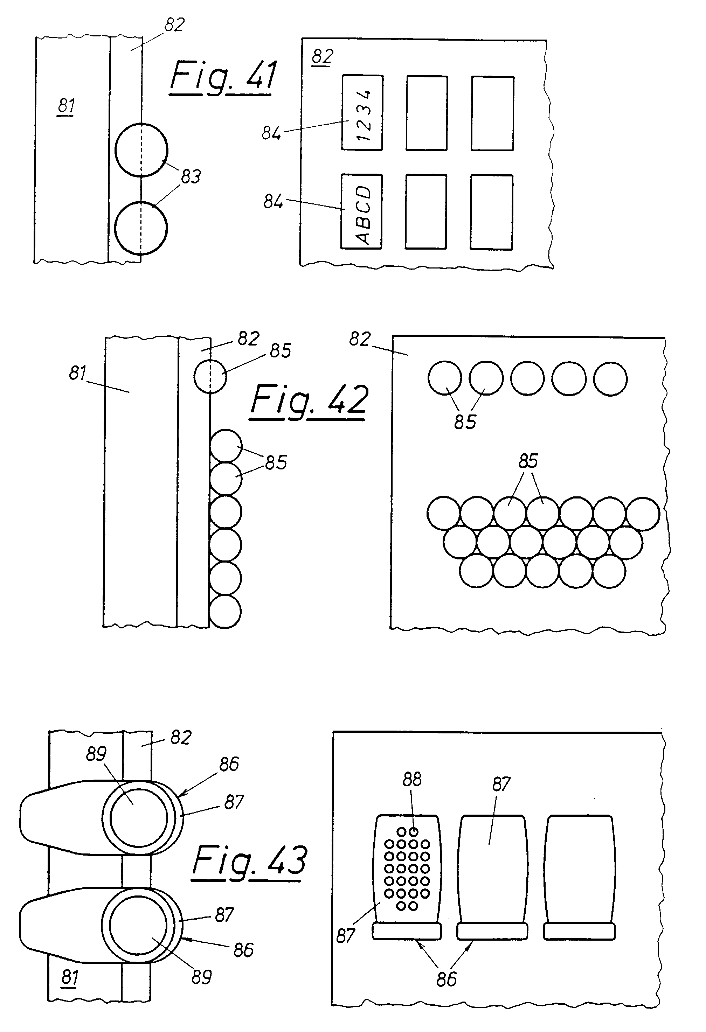

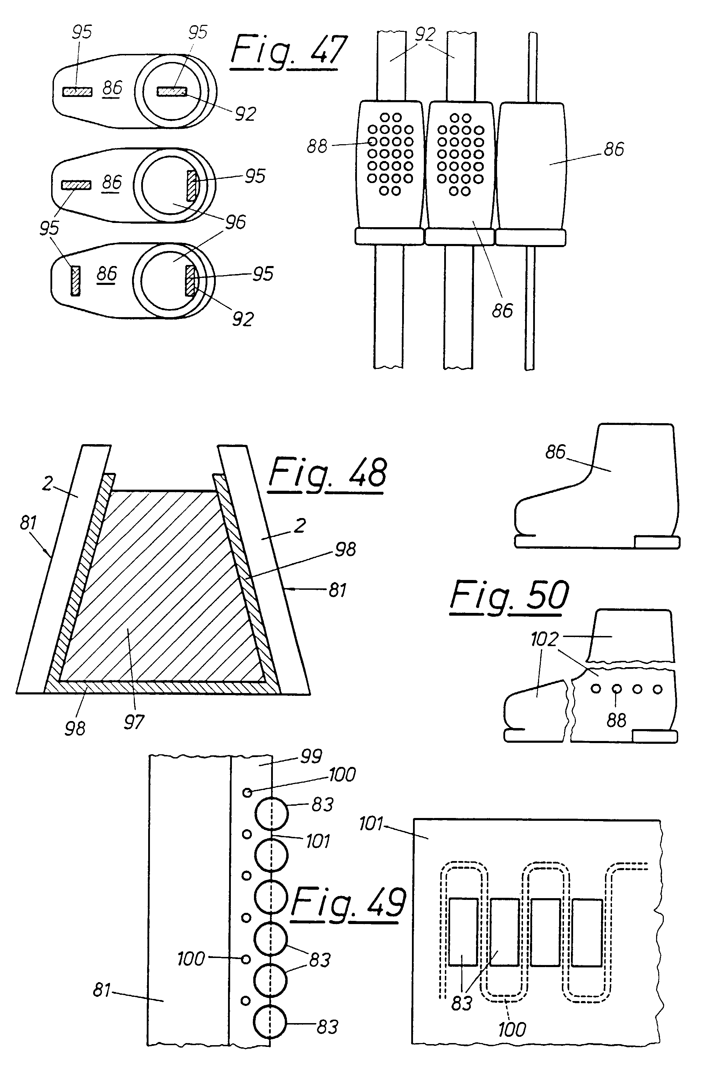

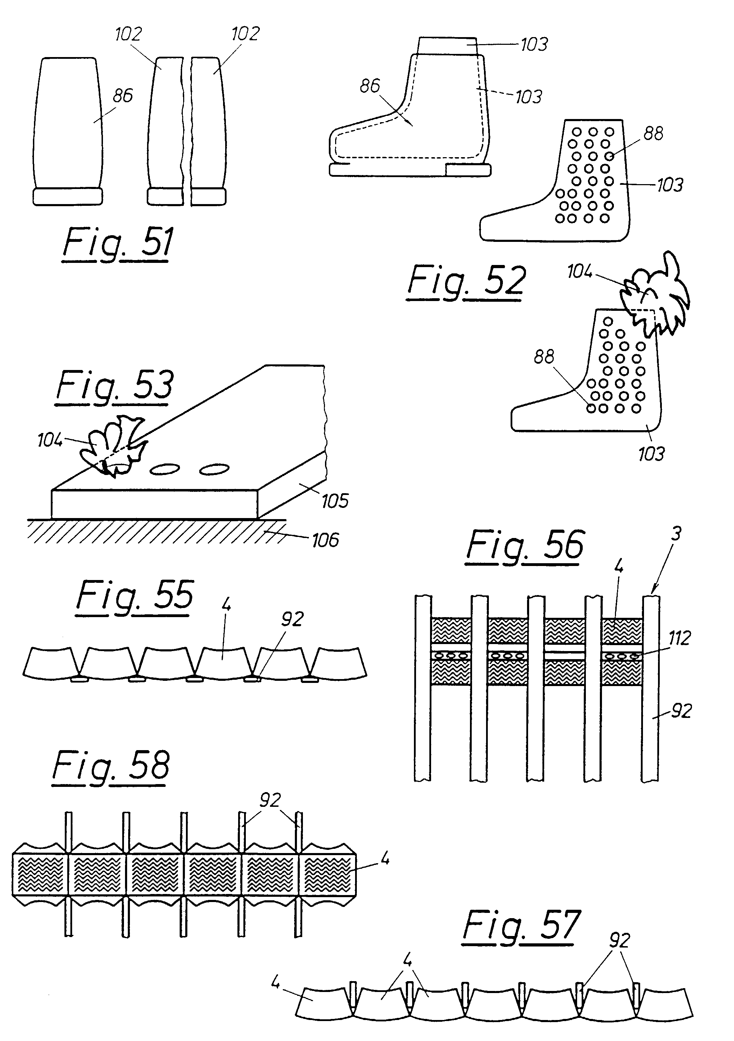

Weitere Kennzeichen und Vorteile der vorliegenden Erfindung ergeben sich aus der Beschreibung von Ausführungsbeispielen, welche in der Zeichnung schematisch dargestellt sind. Fig.1 zeigt ein erstes Ausführungsbeispiel in Ansicht. Die Fig.2 und 3 sind Schnitte nach den Linien II-II bzw. III-III der Fig.1. Fig.4 zeigt ein zweites Ausführungsbeispiel in Ansicht. Die Fig.5 und 6 sind Schnitte nach den Linien V-V bzw. VI-VI der Fig.4. Die Fig.7a und 7b zeigen ein weiteres Ausführungsbeispiel im Vertikalschnitt bzw. in Draufsicht. Die Fig.8 bis 13 zeigen weitere Ausführungsbeispiele im Vertikalschnitt. Die Fig.14 und 15 zeigen ein Detail im Schnitt bzw. in Ansicht. Die Fig.16 bis 19 zeigen Details. Fig.20 zeigt ein weiteres Ausführungsbeispiel in Ansicht. Fig.21 ist ein Schnitt nach der Linie XXI-XXI der Fig.20. Die Fig.22 bis 28 zeigen Details, teilweise im Schnitt. Die Fig.29 und 30 zeigen weitere Ausführungsbeispiele im Vertikalschnitt. Die Fig.31 bis 40 zeigen Details, teilweise in Ansicht, teilweise im Schnitt. Die Fig.41 bis 47 zeigen weitere Ausführungsvarianten für die Hohlkörper, jeweils im Grundriß und in Ansicht. Fig.48 zeigt ein weiteres Detail im Querschnitt. Fig.49 zeigt im Grundriß und in Ansicht eine weitere Variante und die Fig. 50, 51 und 52 zeigen die Verwendung von Skischuhen bzw. deren Innenteilen als Hohlkörper. Fig.53 zeigt ein mit Pflanzen bestücktes Element. Die Fig.54 bis 64 zeigen die Verbindung zwischen Reifenteilen und Skis.

Bei der Ausführungsform nach den Fig.1 bis 3 weist der Schutzaufbau 1 mehrere auf seinen beiden Seiten angeordnete Verkleidungselemente 2 auf, die gleichsam zwei voneinander in Abstand liegende Wände bilden, wobei jede dieser Wände im dargestellten Ausführungsbeispiel zwei übereinander liegende Verkleidungselemente 2 hat, die aufeinander aufliegen. Jedes dieser Verkleidungselemente 2 hat ein Traggerüst 3 in Form eines rahmenförmigen Lattengerüstes, an dem an der Außenseite nach zumindest einer Seite offene Hohlkörper bzw. Schalen, insbesondere Reifensektoren 4, befestigt sind. Diese Reifensektoren 4 sind aus Altreifen gebildet, und zwar derart, daß der Altreifen an einer Stelle völlig durchtrennt ist, wogegen ein an einer anderen Stelle des Reifens geführter Schnitt von der Reifenöffnung nur bis maximal zur Laufschicht des Reifens verläuft. Auf diese Weise entstehen untereinander zusammenhängende Reifensektoren 4, die auseinandergezogen werden, so daß sie mit ihren konkaven oder konvexen Seiten dem Traggerüst 3 zugewendet an diesem befestigt werden können. Diese Befestigung kann im Prinzip mittels beliebiger Befestigungsmittel erfolgen, z.B. Schrauben, Dübel usw. Dadurch, daß jeweils benachbarte Reifensektoren 4 noch im Bereich der Laufschicht zusammenhängen, kann mit einer verhältnismäßig geringen Anzahl von Befestigungsmitteln das Auslangen gefunden werden. Die von den beiderseitig angeordneten Verkleidungselementen 2 gebildeten Wände liegen in einem Abstand a (Fig.2) voneinander, welcher größer ist als die in der gleichen Richtung gemessene Tiefe t eines Verkleidungselementes 2. In dem so gebildeten Hohlraum 5 ist eine Abstützung 6 vorgesehen, die auf dem Boden 7 aufliegt und zumindest teilweise aus einem schüttbaren Material besteht, welches nach Errichtung der von den Traggerüsten 3 gebildeten Verkleidungswände in den Hohlraum 5 von oben eingeschüttet wird. Dieses schüttbare Material füllt den Hohlraum 5 zur Gänze aus und bildet eine Abstützung für die Verkleidungselemente 2, welche diese Verkleidungselemente gegen Stöße von außen, z.B. durch auffahrende Fahrzeuge, hält. Da das den Hohlraum 5 ausfüllende schüttbare Material durch sein Gewicht und durch die Wucht des Einfüllens trachtet, die beiderseitigen Verkleidungselemente 2 voneinander zu entfernen, sind die zu beiden Seiten des Schutzaufbaues 1 angeordneten Verkleidungselemente durch Verbindungselemente 8 zugschlüssig miteinander verbunden, z.B. durch mit einem Korrosionsschutz versehene Stahlseile od.dgl. Diese Verbindungselemente 8 sind insbesondere im Bodenbereich des Schutzaufbaues 1 angeordnet, da dort die beschriebenen Kräfte am stärksten wirksam werden. Es sind daher zumindest die untersten Verkleidungselemente 2 durch die Verbindungselemente 8 verbunden, zweckmäßig jedoch auch die darüber angeordneten Verkleidungselemente 2. Um ein Auskippen nach außen jedes Verkleidungselementes 2 zu verhindern, sind zweckmäßig die zugschlüssigen Verbindungselemente 8 im unteren und im oberen Bereich jedes Verkleidungselementes 2 angeordnet. Auf diese Weise ergibt sich schon eine stabile Konstruktion, zumal es möglich ist, in das schüttbare Material, welches den Hohlraum 5 ausfüllt, aushärtbare Zusätze einzubringen, z.B. Beton od.dgl. Zumindest zum Teil besteht jedoch dieses schüttbare Material aus zumindest einem Problemstoff, d.h., aus einem Material, welches bei seiner Entsorgung Schwierigkeiten bereitet. Beispiele für solche Materialien wurden eingangs angeführt. Falls nötig, können in der Abstützung 6 starre Versteifungselemente 9 angeordnet sein, um die Stabilität des Schutzaufbaues 1 zu erhöhen. Im dargestellten Ausführungsbeispiel sind diese Versteifungselemente 9 von gebrauchten Baustahlträgern gebildet, die im Boden 7 verankert sind. Wie ersichtlich, ergibt sich somit auch für die Versteifungselemente 9 eine sinnvolle Verwendungsmöglichkeit für Problemmaterialien. Dies gilt auch für das Material der Traggerüste 3 der Verkleidungselemente 2, so daß sich für fast alle wesentlichen Bestandteile des Schutzaufbaues 1 die Möglichkeit der Verwendung von Problemmaterial ergibt.

Die Verbindungselemente 8 sind in das Material der Abstützung 6 eingebettet, so daß dieses Material einer Verlagerung der Verbindungselemente 8, etwa verursacht durch den Aufprall eines Fahrzeuges, entgegenwirkt.

Das Material der Abstützung 6 kann in die von den Reifensektoren 4 gebildeten Hohlräume etwas eindringen und diese Hohlräume teilweise ausfüllen, jedoch nicht völlig. Die verbleibenden Hohlräume sind mit einem für den Wuchs einer Bepflanzung 10 bzw. Begrünung geeigneten Material zumindest teilweise gefüllt, zweckmäßig mit Erde, Kompost od.dgl. Auch dieses Material kann Zusätze an Problemstoffen enthalten, z.B. Gülle, Hochofenschlacke oder Schaumstoffteilchen.

Die normal zur Ebene des Schutzaufbaues 1 gemessene größte Breite der Abstützung 6 muß nicht überall größer sein als die Tiefe t eines Verkleidungselementes, es genügt, wenn dieses Maß an einer oder wenigen Stellen erfüllt ist, um eine entsprechende Menge an Abstützungsmaterial unterbringen zu können und die nötige Stabilität des Schutzaufbaues 1 erreichen zu können. Weiters muß die Bepflanzung nicht an allen Verkleidungselementen 2 vorgesehen sein bzw. es müssen nicht alle der von den Reifensektoren 4 gebildeten Hohlräume ein für den Wuchs der Bepflanzung 10 geeignetes Material enthalten. Hierauf wird später noch mehr eingegangen. Um den Wuchs der Bepflanzung 10 zu erleichtern, sind die Reifensektoren 4 mit Löchern 11 versehen, durch welche die Bepflanzung 10 hindurchwachsen kann. Nach einiger Zeit ist somit - falls dies gewünscht ist - der gesamte Schutzaufbau 1 von der Bepflanzung durchwachsen und somit völlig begrünt.

Bei der Ausführungsform nach den Fig.4 bis 6 liegt eine bestehende Wand 12 vor, die einen Teil der Abstützung 6 bildet. Diese Wand 12 ist durch die Verkleidungselemente 2 einseitig verkleidet und auf diese Weise begrünt, eine derartige Verkleidung kann jedoch - falls gewünscht - auch auf der anderen Seite der Wand 12 angeordnet sein. Die Verkleidungselemente 2 liegen zumindest im unteren Teil der Wand 12 in einem Abstand b von der Wand 12 und sind durch Verbindungselemente 8 zugschlüssig mit der Wand 12 verbunden, z.B. mittels Ankerschrauben. Der zwischen der Wand 12 und den Verkleidungselementen 2 verbleibende Zwischenraum 13 ist mit schüttbarem Material ausgefüllt, welches zumindest einen Problemstoff der eingangs geschilderten Art enthält und in welches die Verbindungselemente 8 eingebettet sind. Die Anordnung der Verbindungselemente 8 entspricht jener nach dem Ausführungsbeispiel gemäß Fig.1 bis 3. Die gesamte Abstützung 6 für die Verkleidungselemente 2 wird somit hier von der Kombination der Wand 12 mit dem in den Zwischenraum 13 eingebrachten Schüttmaterial gebildet. Gegebenenfalls kann diese Abstützung 6 durch Versteifungselemente 9 verstärkt sein.

Es ist ersichtlich, daß die Verkleidungselemente 2 auch über die bestehende Wand 12 hinausreichen können, falls dies gewünscht ist, so daß die bestehende Wand 12 mit einer Aufstockung 14 versehen ist. Im Bereich dieser Aufstockung sind Verkleidungselemente 2 Rücken an Rücken angeordnet, so daß im Bereich der Aufstockung 14 eine beidseitige Begrünung erzielt wird. Durch geeignete Wahl der Bepflanzung 10 läßt sich erreichen, daß diese Bepflanzung 10 von den Verkleidungselementen 2 der Aufstockung 14 nach unten hängt und derart zumindest Teile der Fläche der Wand 12 mit einer Begrünung abdeckt, was in Fig.6 für die linke Hälfte der Wand 12 angedeutet ist. Im Bereich der Aufstockung 14 sind die Verkleidungselemente 2 durch die Verbindungselemente 8 unmittelbar miteinander verbunden, jedoch verbleibt zwischen den beidseitigen Verkleidungselementen 2 bzw. deren Traggerüsten 3 noch ein Zwischenraum 13, um eine eine Abstützung 6 bildende Befüllung einbringen zu können. Wie aus Fig.4 ersichtlich, können die Versteifungselemente 9, welche hier Steher bilden, bis in den Bereich der Aufstockung 14 ragen.

Wie die Fig.7a und 7b zeigen, muß der Schutzaufbau nicht vertikal angeordnet sein. Vielmehr kann sowohl die Abstützung zur Horizontalen geneigt sein, als auch die Verkleidungselemente 2. Fig.7a zeigt eine zur Seite einer Fahrbahn 15 liegende Böschung 16, deren Hangneigung eine Rutschgefahr zur Folge hat. Um diesen Hang zu sichern, sind in die Böschung 16 Schutzaufbaue 1 eingearbeitet, welche in Rinnen 17 liegen, die in die Böschung 16 eingearbeitet sind. Diese Rinnen 17 können, doch müssen nicht, in Richtung der Falllinie der Böschung 16 verlaufen. In diesen Rinnen 17 liegen die Verkleidungselemente 2 in zwei Reihen, die im Abstand voneinander angeordnet sind, wobei die Verkleidungselemente 2 der beiden Reihen paarweise miteinander durch zugschlüssige Verbindungselemente 8 verbunden sind. Der verbleibende Zwischenraum zwischen den beiden Reihen der Verkleidungselemente 2 ist mit der Abstützung 6 aus problemstoffhältigem Material ausgefüllt. Da der von der Böschung 16 gebildete Hang Druckkräfte in Richtung der Pfeile 18 (Fig.7b) ausüben kann, ist es zweckmäßig, die Verbindungselemente 8 auch drucksteif auszubilden und bzw. oder drucksteife Versteifungselemente anzuordnen, welche verhindern, daß das Material der Abstützung 6 herausgedrückt wird. Die aus den Reifensektoren 4 herauswachsende Bepflanzung 10 deckt nach einiger Zeit den Aufbau 1 ab. Dies kann dadurch unterstützt werden, daß die Abstützung 6 mit einer oben liegenden Schicht aus einem für den Wuchs einer Begrünung geeigneten Material versehen wird.

Fig.8 zeigt eine Ausführungsform, bei welcher ein Steilwall 19 einen Teil der Abstützung 6 bildet. Der restliche Teil der Abstützung wird durch zwei an den beiden Flanken des Steilwalles 19 liegenden Schichten aus schüttbarem Material gebildet, die zwischen den Flanken des Steilwalles 19 und den beiderseits angeordneten Verkleidungselementen 2 liegen. Die an den einzelnen Verkleidungselementen 2 angeordneten Reifensektoren 4 haben unterschiedliche Größe. Dies kann einerseits dadurch erzielt werden, daß Altreifen unterschiedlicher Größe zur Anwendung kommen, oder dadurch, daß Altreifen an sich gleicher Größe zur Anwendung kommen, die jedoch durch eine unterschiedliche Anzahl von Schnitten in unterschiedlich große Sektoren unterteilt werden. Wie in Fig.8 in der rechten Hälfte dargestellt ist, läßt sich auf diese Weise erzielen, daß der Böschungswinkel der von den Frontseiten der Reifensektoren 4 gebildeten Fläche abweicht vom Böschungswinkel der Flanke des Steilwalles 19. In der linken Hälfte der Fig.8 ist jedoch eine andere Variante dargestellt, bei welcher die am jeweiligen Verkleidungselement 2 unten angeordneten Reifensektoren 4 über die anderen Reifensektoren des betreffenden Verkleidungselementes vorragen. Diese vorragenden Reifensektoren 4 fangen abrinnendes Regenwasser auf und bilden daher einen Wasserfang. In gewissem, jedoch verringertem Maße gilt dies auch für die stufenweise verlaufende Vergrößerung der Reifensektoren 4 auf der rechten Seite des Aufbaues 1 nach Fig.8.

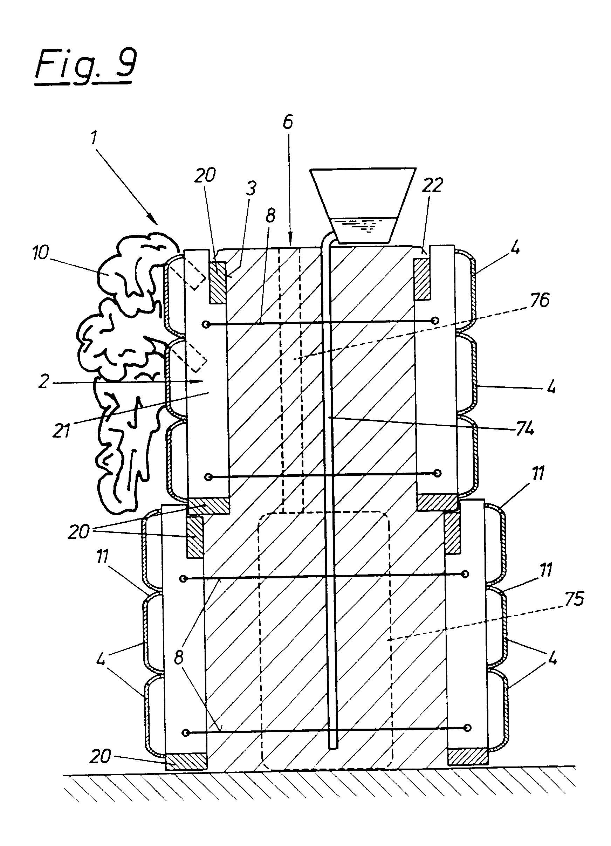

In Fig.9 sind die Verkleidungselemente 2 im Aufbau 1 treppenförmig gegeneinander versetzt, so daß auch der gesamte Schutzaufbau 1 treppenförmige Gestalt erhält und so tiefe Fundamente entfallen können. Es ist hier die Konstruktion des Traggerüstes 3 für jedes Verkleidungselement 2 ersichtlich, dieses Traggerüst 3 besteht aus Querlatten 20, welche durch vertikal verlaufende Latten 21 zu einem starren Rahmen verbunden sind. Das so gebildete Traggerüst 3 ist so stabil, daß das gesamte Verkleidungselement 2 an einer vom Aufstellungsort des Schutzaufbaues 1 entfernten Stelle, zweckmäßig in einem gesonderten Fertigungsbetrieb, vorgefertigt werden kann und samt den Reifensektoren und der von ihnen getragenen Begrünung an den Aufstellungsort des Schutzaufbaues 1 transportiert werden kann.

Um die treppenförmige Versetzung der Verkleidungselemente 2 zu erleichtern, sind die Traggerüste 3 an ihren oberen Rändern jeweils mit Aussparungen 22 versehen, in welche die jeweils oben liegenden Traggerüste eingesetzt werden. Wie gezeigt, kann der Abstand, in welchem die beidseitigen Verkleidungselemente 2 voneinander angeordnet sind, insbesondere im unteren Bereich des Schutzaufbaues 1 sehr groß sein, wenn die örtlichen Gegebenheiten dies zulassen. Auf diese Weise läßt sich eine erhebliche Menge an Problemmaterial in der schüttbaren Abstützung 6 unterbringen.

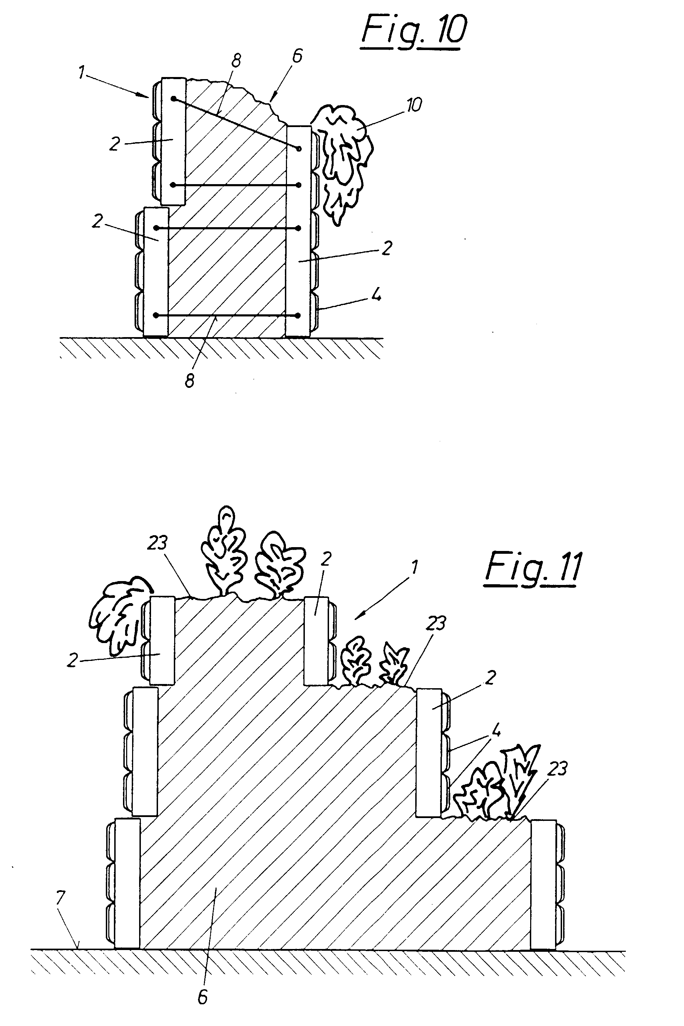

Fig.10 zeigt, daß die zu beiden Seiten des Schutzaufbaues 1 angeordneten Verkleidungselemente nicht jeweils gleich groß sein müssen. Desgleichen kann die Anordnung auf beiden Seiten unterschiedlich sein. So zeigt Fig.10, daß auf der rechten Seite des Schutzaufbaues 1 nur ein einziges Verkleidungselement (gerechnet über die Höhe des Schutzaufbaues) angeordnet ist, wogegen auf der linken Seite zwei Verkleidungselemente 2 liegen, die treppenartig gegeneinander versetzt sind. Aus der rechten Hälfte der Fig.10 ist auch ersichtlich, daß dort die Verkleidungselemente 2 nicht über die gesamte Höhe der Abstützung 6 reichen. Dementsprechend können die Verbindungselemente 8, welche die beidseitigen Verkleidungselemente 2 halten, auch schräg verlaufen, wie dies für das oberste Verbindungselement 8 angedeutet ist.

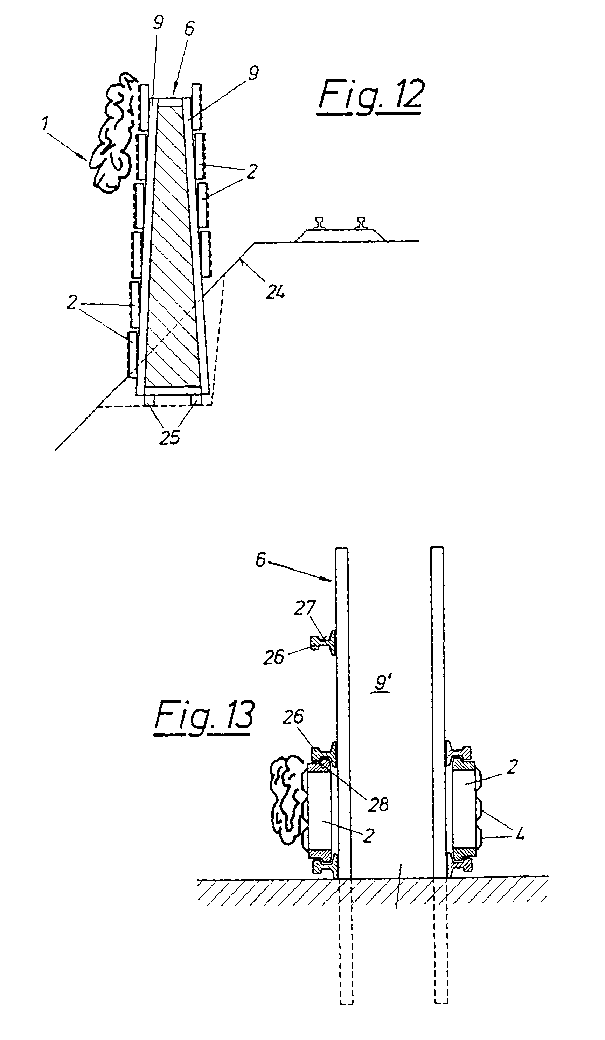

Fig.11 zeigt einen Schutzaufbau 1, dessen Querschnitt stark treppenförmig ausgebildet ist. Die nach oben gerichteten Oberflächenbereiche 23 können Bewirtschaftungsflächen bilden, also landwirtschaftlich genutzt werden, z.B. für den Anbau von Gemüsepflanzen. Es besteht auch die Möglichkeit, die vertikal verlaufenden Flächen landwirtschaftlich zu nutzen, z.B. durch Einsetzen von Erdbeerpflanzen in die von den Reifensektoren gebildeten Nischen.

Bei der Ausführungsform nach Fig.12 bilden die Versteifungselemente 9 der Abstützung 6 ein starres Gerüst, welches im vorliegenden Fall in die Flanke eines Eisenbahndammes 24 eingesetzt ist. Um dieses Gerüst besser in der Dammflanke zu verankern, sind am Bodenteil des rahmenartigen Gerüstes Ankerelemente 25 in Form von quer zur Ebene des Gerüstrahmens verlaufenden Schwellen befestigt. Wie ersichtlich, sind die Verkleidungselemente 2 zu beiden Seiten des Schutzaufbaues 1 auf unterschiedlicher Höhe angeordnet, sie reichen nach unten bis jeweils zur Oberfläche der Flanke des Eisenbahndammes 24, können jedoch auch, wie dies für das links unten liegenden Verkleidungselement 2 dargestellt ist, in diese Oberfläche eingebettet sein.

Gemäß Fig.13 tragen die von Stehern gebildeten Versteifungselemente 9 der Abstützung 6 horizontal und parallel zueinander verlaufende Montageleisten 26, wobei die Verkleidungselemente 2 zwischen jeweils zwei solche Montageleisten 26 eingesetzt sind. Um den Halt und die Montage zu erleichtern, sind diese Montageleisten 26 mit Profilierungen 27 versehen, wobei die Verkleidungselemente 2 mit entsprechend verlaufenden Profilierungen 28 versehen sein können. Die zwischen den Versteifungselementen 9 verbleibenden Hohlräume 9' sind hier noch nicht durch das problemstoffhältige Material ausgefüllt, es zeigt Fig.13 also ein Zwischenstadium der Montage.

Die Fig.14 und 15 zeigen Steckverbindungen 29 für den Anschluß der Reifensektoren 4 an den Traggerüsten 3. Diese Steckverbindungen weisen in den Rahmenteilen der Traggerüste 3 verankerte Bolzen 30 auf, auf welche die Reifensektoren 4 aufgesteckt und mittels Keilen 31 gesichert sind. Die oberen Flanken 32 der Reifensektoren 4 weisen die Öffnungen 11 für den Einsatz der Bepflanzung auf, die Laufflächen 33 der Reifensektoren 4 sind mit einer Lochung 34 versehen, welche einerseits eine Belüftung für das die Reifensektoren 4 hinterfüllende, für den Wuchs der Bepflanzung 10 dienende Material bilden, anderseits eine gute Schallabsorption bewirken.

Gemäß Fig.16 befindet sich zumindest unterhalb der Abstützung 6, vorzugsweise jedoch unterhalb des gesamten Schutzaufbaues 1 eine Wanne 35, die dazu dient, allfällige aus den im Schutzaufbau 1 enthaltenen Problemstoffmaterialien austretende umweltschädigende Stoffe aufzufangen. In Längsrichtung des Schutzaufbaues ist diese Wanne 35 an ihren Stoßstellen mit einer Profilierung versehen, welche die einzelnen Abschnitte der Wanne gegeneinander abdichtet. In bestimmten Abständen kann die Wanne 35 mit Ableitungen 36 oder Sammelräumen zur Ableitung bzw. Auffangung der schädlichen Substanzen versehen sein. Die Wanne besteht aus absolut dichtem, korrosionsbeständigem Material, um eine Kontamination des Erdbodens sicher zu verhindern.

Gemäß Fig.17 haben die Traggerüste 3 der Verkleidungselemente vertikale Steher 37, auf welche die Reifensektoren 4 mit Öffnungen 38 aufgesteckt sind. Die Öffnungen 38 haben einen Querschnitt, welcher zweckmäßig größer ist als jener der Steher 37, so daß die Aufsteckung der Reifensektoren 4 erleichtert wird und eine begrenzte Nachgiebigkeit, z.B. zwecks Aufnahme von Herstellungstoleranzen, gegeben ist.

Die Fig.18 und 19 zeigen, daß bei der Montage des Schutzaufbaues 1 die Traggerüste 3 der Verkleidungselemente 2 eine Schalung für das schüttbare Material der Abstützung 6 bilden können. Hiezu ist jedes Traggerüst 3 an seiner Innenseite mit einem gelochten Vlies 39 bedeckt, welches verhältnismäßig enge Löcher hat, so daß das Material der Abstützung 6 im wesentlichen zurückgehalten wird, wenn dieses Material, wie Fig.19 zeigt, in Richtung des Pfeiles 40 zwischen die Verkleidungselemente 2 eingebracht wird. Durch die Löcher dieses Vlieses 39 kann jedoch die Bepflanzung 10 nach innen durchwachsen. Zweckmäßig erfolgt bei der Montage des Schutzaufbaues 1 zunächst die Befüllung der Hohlräume der Traggerüste 3, also der von den Reifensektoren 4 begrenzten Hohlräume mit einem für den Wuchs der Bepflanzung geeigneten Material von oben (Pfeile 41). Erst dann erfolgt die Einbringung des schüttbaren Materiales der Abstützung 6.

In der Regel sind die Reifensektoren in ihrer natürlichen Gestalt, d.h. nicht oder kaum flachgedrückt, an den Traggerüsten 3 befestigt. Wie die Fig.20 und 21 jedoch zeigen, können die Reifensektoren 4 auch flachgezogen an den Traggerüsten 3 befestigt sein. Dies hat den Vorteil, daß die normal zur Längserstreckung des Schutzaufbaues 1 gemessene Tiefe desselben sehr gering gehalten werden kann. Dies ist von Vorteil dort, wo der am Aufstellungsort zur Verfügung stehende Platz sehr gering ist. Das Flachziehen der Reifensektoren 4 und das Lochen der Reifenflanken wird erleichtert, wenn mehrere Reifensektoren untereinander zusammenhängen.

Bei der Ausführungsform nach Fig.22 sind die Reifensektoren 4 mit ihren Flanken 32 in ein härtbares Material des Traggerüstes 3 eingegossen. Dieses härtbare Material kann z.B. Beton oder Kunststoff sein.

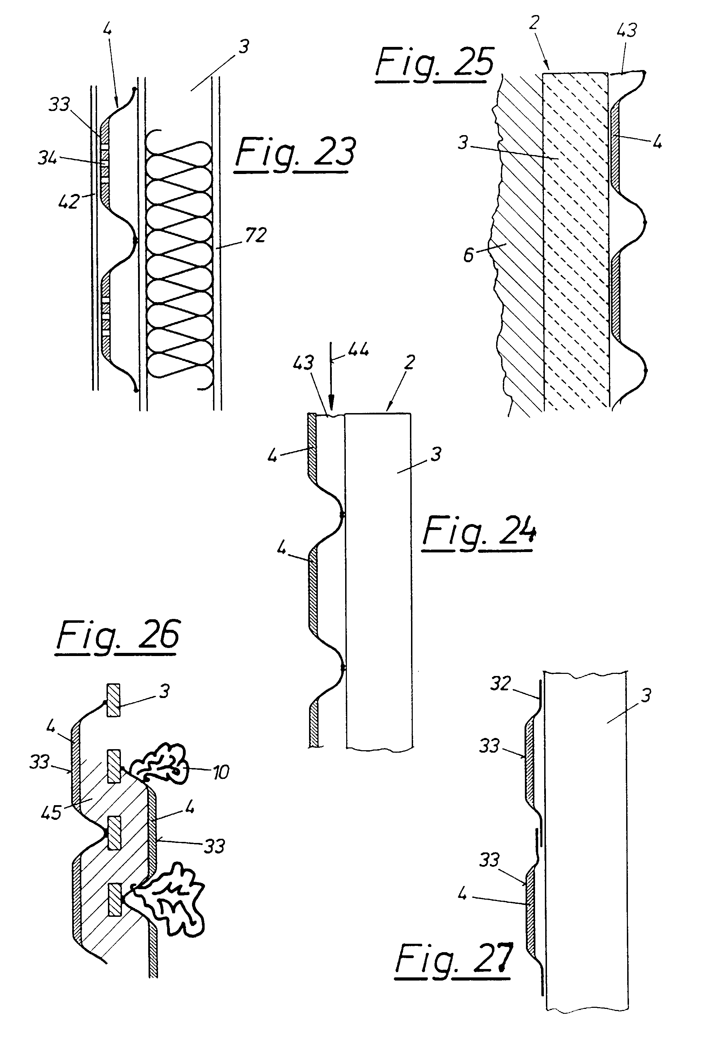

Gemäß Fig.23 ist an der Außenseite der Reifensektoren 4 eine Beschichtung 42 vorgesehen, welche eine Erhöhung der schallabsorbierenden Eigenschaften des Schutzaufbaues bewirkt. Eine solche Beschichtung 42 kann beispielsweise aus zerkleinertem Stroh bestehen, welches in geeigneter Weise durch ein Bindemittel gebunden und zweckmäßig mittels dieses Bindemittels an den Laufflächen 33 der Reifensektoren 4 befestigt ist. Eine Alternative hierzu ist eine Kunststoffschicht. Wie Versuche ergeben haben, bleibt trotz Anbringung der Beschichtung 42 die Lochung 34 schallabsorbierend wirksam. Gemäß Fig.24 sind bei den zu oberst am Verkleidungselement 2 befestigten Reifensektoren 4 die oben angeordneten Reifenflanken entfernt, so daß nach oben gerichtete Öffnungen 43 entstehen, die in Richtung des Pfeiles 44 einfallendes Regenwasser auffangen können. Dadurch wird die Bewässerung der Bepflanzung begünstigt.

Fig.25 zeigt, daß die Reifensektoren nicht immer mit den konvexen Seiten nach außen gewendet an den Verkleidungselementen 2 vorgesehen sein müssen. Die Anordnung kann vielmehr auch so sein, daß die konkaven Seiten der Reifensektoren 4 nach außen weisen. Auch bei einer solchen Anordnung läßt es sich erreichen, daß nach oben gerichtete Öffnungen 43 entstehen, wobei diese Anordnung der Reifensektoren sogar den Vorteil hat, daß diese Öffnungen 43 ohne Abschneidung von Flankenbereichen der Reifen auszubilden sind.

Fig.26 zeigt, daß die Reifensektoren 4 auch so an horizontalen oder vertikalen Latten des Traggerüstes 3 befestigt sein können, daß die Laufflächen 33 nach unterschiedlichen Seiten sehen. Dies ergibt einen beidseitigen Halt für die Hinterfüllung 45 der Reifensektoren 4, welche vom für den Wuchs der Begrünung 10 geeigneten Material gebildet ist.

Fig.27 zeigt, daß es möglich ist, von den Reifensektoren 4 die Felgenbereiche zu entfernen, so daß nur die Laufflächenbereiche 33 samt Teilen der benachbarten Flanken 32 verbleiben und an den Traggerüsten 3 befestigt sind. Dadurch wird die Flachziehung der Reifensektoren 4 erleichtert, so daß sich eine sehr schmale Konstruktion ergibt.

Die Traggerüste 3 können Profilierungen 46 (Fig.28a) anstelle der Aussparungen 22 (Fig.9) haben, um aufeinander liegende oder gegebenenfalls auch seitlich aneinander liegende Traggerüste verschiebungssicher miteinander zu verbinden. Wie Fig.28b zeigt, besteht eine Variante hierfür darin, die Traggerüste 3 in Profilschienen 47 einzusetzen, die z.B. aus Recyclingmaterial bestehen. Hiefür eignet sich insbesondere Recyclingkunststoff, der in geeigneter Weise armiert ist. Die Verbindungsstellen solcher Recyclingkunststoffschienen können durch mit Kunststoff getränkte Glasfaservliesbandagen verstärkt sein. Eine Alternative hierzu besteht darin, gebrauchte Baustahlteile für die Profilschienen 47 zu verwenden.

Gemäß Fig.29 liegt eine bestehende Wand 12 vor, die beidseitig vom Schutzaufbau 1 abgedeckt ist. In das Material der zwischen den Verkleidungselementen 2 und der Wand 12 liegenden Abstützung 6 ist eine z.B. als Schale 48 ausgebildete Konstruktion eingebettet, die somit einen Teil der Abstützung 6 bildet und nach oben aus dem Schutzaufbau 1 herausragt. Dieser obere, gegebenenfalls gekrümmte Teil bildet eine Verlängerung 49, welche eine Unterkonstruktion für einen Schallfang und bzw. oder eine Überdachung, z.B. eines Fahrbahnbereiches 15 bildet. Wie Fig.30 zeigt, kann diese gegebenenfalls gekrümmte Verlängerung 49 auch mittels einer Steckverbindung 50 auf die Wand 12 aufgesetzt sein. Gegebenenfalls kann der Verlängerungsteil 49 auch selbst einen Schallfang bilden, wobei gegebenenenfalls alte Schallschutzpaneele Verwendung finden können.

Gegebenenfalls kann, wie Fig.31 zeigt, die Bepflanzung 10 in Behältern 51 angeordnet sein, welche ladenartig herausziehbar im Schutzaufbau 1 angeordnet sind.

Wie Fig.32 zeigt, kann zwischen der Oberfläche des Schutzaufaufbaues 1, also zwischen den Laufflächen 33 der Reifensektoren 4, und einer oder mehreren, eine Abdeckung bildenden Folien 52, Vliesen oder Netzen, eine Schicht 53 vorgesehen sein, welche schallabsorbierende Eigenschaften hat. Eine solche Schicht kann z.B. von zerkleinertem Stroh gebildet sein, welches mit einem Bindemittel versehen und derart an den Reifensektoren 4 befestigt ist. Alternativen hierzu bilden zerkleinerte Kunststoffabfälle oder Granulate aus Schaumstoffen oder Schlacken.

Eine Alternative hierzu besteht darin, eine solche Schicht auf der Rückseite der die Abdeckung bildenden Folien 52 od.dgl. anzubringen.

Es besteht die Möglichkeit, den Schutzaufbau für die Anbringung von Werbungen auszunützen, ebenso wie die Anordnung von Warnanlagen, z.B. für Geisterfahrer, und bzw. oder Überwachungsanlagen, z.B. Radargeräten, an oder in den Bauteilen des Schutzaufbaues möglich ist. Fig.33 zeigt eine besonders günstige Ausbildung für eine Werbung. Hiebei sind die Verkleidungselemente 2 bzw. Abschnitte der Abdeckungen 53 an der Außenseite farblich gestaltet. Durch entsprechende Anordnung lassen sich Beschriftungen 54 zu Werbezwecken bilden. Ein gleicher Effekt kann durch sichtbar befestigte alte Skis bzw. Skischuhe erzielt werden. Dem Wunsche, solche Beschriftungen nach einer bestimmten Zeit verschwinden zu lassen, kann in einfacher Weise dadurch Rechnung getragen werden, daß die Bepflanzung 10 nach einer bestimmten Zeit diese Werbungen überwuchert und dadurch unsichtbar macht.

Eine Alternative hierzu zeigt Fig.34: Einzelne Abschnitte der Abdeckungen 53 können künstlerisch gestaltet werden, so daß beliebige Motive 55 bzw. Begriffsinhalte verdeutlicht werden können.

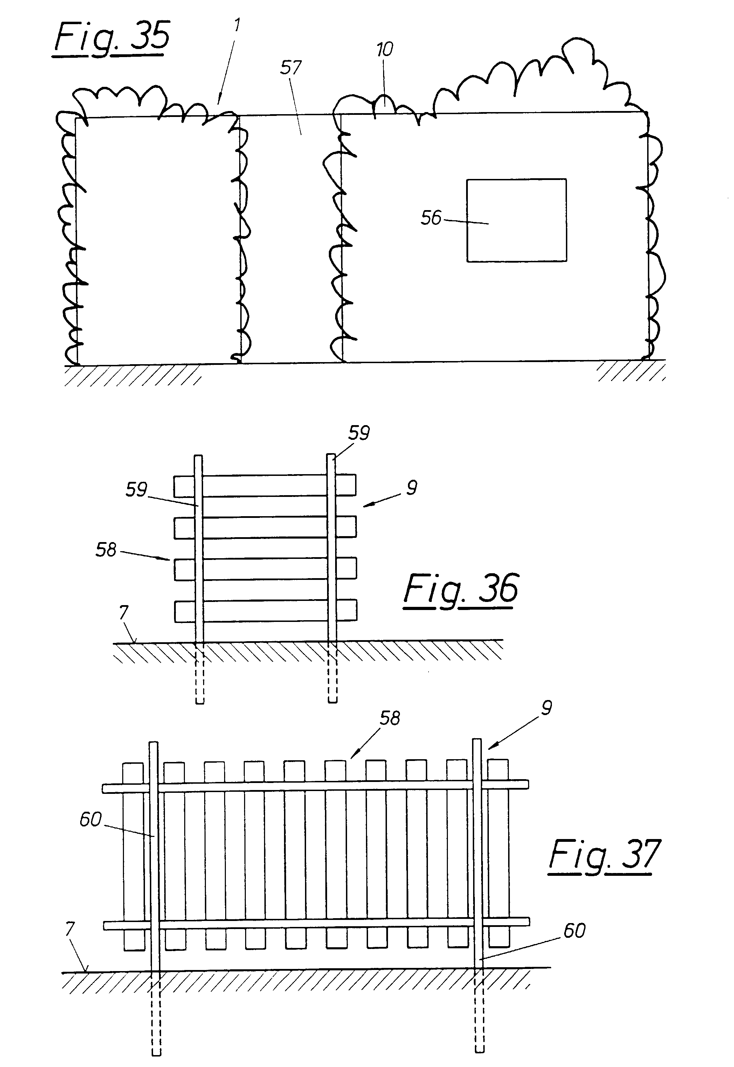

Der Schutzaufbau muß nicht über seine gesamte Länge gleichmäßig ausgebildet sein. Wie Fig.35 zeigt, ist es vielmehr auch möglich, in einzelnen Abschnitten des Schutzaufbaues Lärmschutzfenster 56 oder Glaswände 57 anzuordnen. Die Fig.36 und 37 zeigen, daß als Versteifungselemente 9 für die Abstützung 6 auch ganze Gleisabschnitte 58 verwendet werden können. Diese Gleisabschnitte 58 können, wie Fig.36 zeigt, mit den Schienen 59 in den Boden 7 eingerammt werden, oder, wie Fig. 37 zeigt, mit den Schienen 59 an im Boden 7 verankerten Stehern 60 befestigt werden.

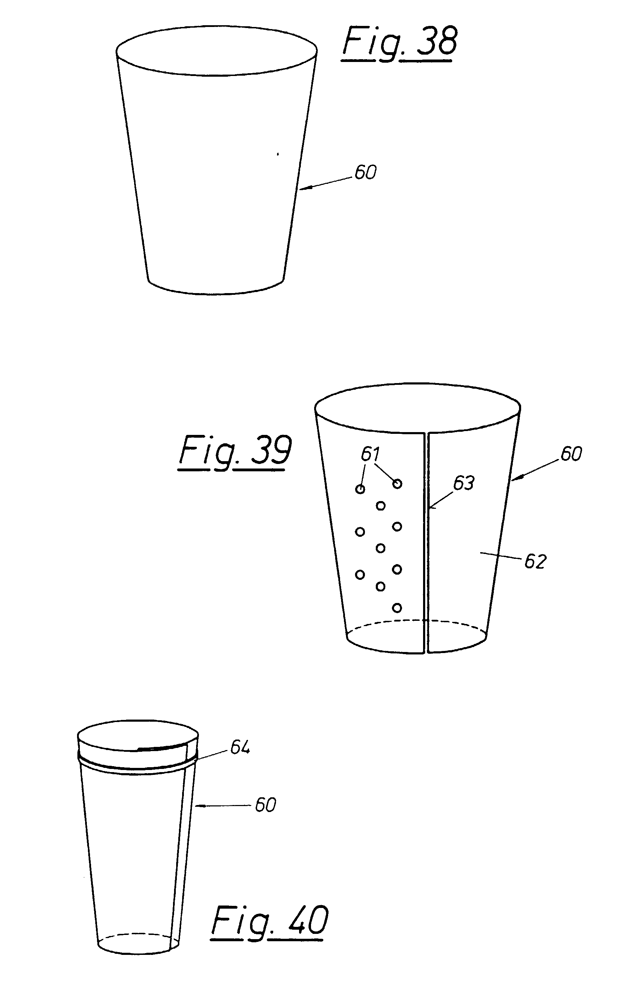

Im Prinzip lassen sich die Pflanzen für die Bepflanzung 10 problemlos durch die Löcher 11 an den oberen Flanken 32 der Reifensektoren 4 einsetzen. Eine besonders günstige Variante hiezu besteht aber darin, die Bepflanzung 10 in Töpfe oder alte Skischuhe einzusetzen, darin anwachsen zu lassen und mit den Töpfen bzw. Skischuhen in die Löcher 11 der Reifensektoren 4 einzusetzen. Solche Töpfe 60 sind in den Fig. 38 bis 40 dargestellt. Sie sind mit dem für den Wuchs der Begrünung 10 geeigneten Material gefüllt, insbesondere Pflanzenerde, Kompost, gegebenenfalls mit den erwähnten Zusätzen. Zweckmäßig ist jedoch der Boden des Topfes 60 bzw. Skischuhes entfernt, wie Fig. 38 für einen Topf zeigt, so daß die Wurzeln der Pflanze nach unten durchwachsen und somit in das Erdmaterial der Hinterfüllung der Reifensektoren 4 einwachsen können. Eine Alternative hierzu besteht gemäß Fig.39 darin, in der Seitenwand des Topfes 36 Löcher 61 anzubringen, durch welche die Pflanze durchwachsen kann. Besonders zweckmäßig ist die Anbringung solcher Löcher 61 in Kombination mit dem entfernten Boden des Topfes 60. Wie Fig.39 ferner zeigt, ist es günstig, die Seitenwand 62 durch einen Schnitt 63 aufzuschneiden. Dies hat einerseits den Vorteil, daß dadurch der Topf 60 (unter der Voraussetzung, daß der Boden entfernt ist) auf ein beliebiges Maß verkleinert werden kann. Anderseits ergibt sich der Vorteil, daß die Pflanze nach genügendem Anwachsen den Topf 60 beliebig weit aufweiten kann. Zweckmäßig wird, wie Fig.40 zeigt, beim Einsetzen ein Band 64 aus elastischem Material, insbesondere ein Gummiring, am oberen Topfende angebracht, welches Band 64 den Topfrand zusammenhält. Gegebenenfalls kann dieses Band 64 später entfernt werden. Eine Alternative hiezu besteht darin, das Band 64 aus einem Material auszubilden, welches mit der Zeit verrottet und dadurch durch die Pflanze von selbst aufgesprengt wird.

Für die Bepflanzung 10 eignen sich im Prinzip alle jene Gewächse, welche dauergrün sind. Besonders geeignete Pflanzen sind Efeu, Immergrün oder Koniferen, insbesondere Fichten und Legföhren. Efeu und Immergrün, aber auch die anderen erwähnten Gewächse kommen in der Natur vor, häufig als Unkrautpflanzen. Es ist zweckmäßig, diese Pflanzen aus der Natur mit den Wurzeln zu entnehmen, da diese Pflanzen in der Regel bereits abgehärtet sind. Zweckmäßig wird das am Entnahmeort befindliche Erdreich mit den Wurzelballen mitgenommen und zusätzlich auch das am Entnahmeort vorhandene Erdreich verwendet, um der Pflanze die gewohnte Umgebung zu erhalten. Dieses Material wird zweckmäßig am Entnahmeort bereits in die Töpfe 60 bzw. Skischuhe eingefüllt und diese werden am Entnahmeort belassen, bis die Pflanzen in genügendem Maße angewachsen sind bzw. sich vom Entnahmevorgang erholt haben. Sobald dies der Fall ist, werden die Töpfe 60 bzw. Skischuhe mit den darin befindlichen Pflanzen in das Werk geführt, in welchem die Herstellung der Verkleidungselemente erfolgt. Dort werden die Topfe 60 bzw. Skischuhe mit den Pflanzen in die Löcher 11 der Reifensektoren 4 eingesetzt, welche somit Pflanzlöcher bilden. Die nunmehr bereits begrünten Verkleidungselemente 2 werden sodann an die Verwendungsstelle des Schutzaufbaues geführt und dort montiert. Dies ergibt eine erhebliche Einsparnis an Montagekosten. Beim Einsetzen der Töpfe bzw. Skischuhe in die Löcher der Reifensektoren 4 wird zweckmäßig ein kurzer Abschnitt des Topfes bzw. Skischuhes über das zugehörige Pflanzloch 11 herausragen gelassen, um die natürliche Beregnung aufzufangen. Die Elemente können aber auch zur Gänze bepflanzt werden und bleiben zunächst längere Zeit in diesem Zustand im Freien.

Es ist zweckmäßig, während des Anwachsvorganges der Pflanzen, also bei noch am Entnahmeort der Pflanzen befindlichen Töpfen 60, die Pflanzen zur Erzielung eines dichten Bewuchses zurückzuschneiden, vorzugsweise mehrmals in zeitlichen Abständen.

Das Material der Töpfe 60 kann, doch muß nicht, verrottbar sein. Als verrottbares Material eignet sich insbesondere Torf, Pappe oder stärkeres Papier. Werden die Töpfe 60 aus nicht verrottbarem Material ausgebildet, so kann der Anwachsvorgang der Pflanzen über lange Zeit erfolgen, ohne daß die Gefahr besteht, daß die Töpfe 60 Schaden erleiden.

Die erwähnte Einsetzung der Pflanzen in Töpfe und die Versetzung der Töpfe in Öffnungen der Reifensektoren läßt sich auch bei anders gearteten Schutzaufbauten anwenden, insbesondere bei Schutzaufbauten, die entsprechend der europäischen Patentschrift 273 911 ausgebildet sind. Erforderlich ist lediglich das Einsetzen der Töpfe in Öffnungen von Altreifen zum Zwecke der Begrünung eines Schutzaufbaues.

Wie Fig.3 zeigt, können die Traggerüste 3 der Verkleidungselemente 2 selbsttragend sein, so daß gesonderte, von den Versteifungselementen 9 gebildete Halterungen mit Ausnahme der Abstützung 6 entbehrlich sind, wenn die Voraussetzungen dies zulassen. Die Traggerüste können, doch müssen nicht, miteinander verbunden sein. Für eine Verbindung benachbarter Traggerüste können herkömmliche Verbindungsmittel Verwendung finden, z.B. Dübel, Schrauben, Klammern usw., gegebenenfalls unter Mitverwendung alter Skis bzw. Surfboards. Ähnliche Elemente können zur Verbindung von Versteifungselementen untereinander dienen bzw. zur Befestigung der Reifensektoren an den zugehörigen Traggerüsten. Es ist zweckmäßig, diese Verbindungsmittel korrosionsfest auszubilden, z.B. aus Kunststoff. Bei einzutreibenden Befestigungsmitteln, z.B. Dübeln oder Nieten, können Widerhaken zweckmäßig sein. Als Alternative hierzu können die Befestigungsmittel von Dornen gebildet sein, insbesondere für die Festlegung der Reifensektoren an den Traggerüsten. Solche Dorne sind ähnlich der in den Fig.14 und 15 dargestellten Befestigungsart, denn die dort dargestellten Bolzen 30 können leicht dornartig ausgebildet werden. Anstelle der zur Sicherung dienenden Keile 31 tritt dann eine Umbiegung des Dornes oder ein Splint.

In der Regel wird jenes schüttbare Material, welches zur Ausfüllung der von den Reifensektoren oder anderen Hohlkörpern bzw. schalenförmigen Elementen begrenzten Hohlräume dient, von jenem Material verschieden sein, welches zur Ausfüllung der Hohlräume 5 für die Abstützung 6 dient. Um die Trennung dieser Materialien aufrecht zu erhalten, ist es zweckmäßig, das Traggerüst 3 auf der Innenseite mit einer das schüttbare Material der Abstützung 6 von dem für den Wuchs der Bepflanzung 10 dienenden Material trennenden Schicht 39 zu versehen (Fig.18,19) oder zumindest die in diesem Zusammenhang erwähnte Schalung zu verwenden. Aus Schallabsorptionsgründen ist es zweckmäßig, an der Schallseite des Aufbaues, d.i. die außen liegende bzw. der Fahrbahn 15 zugewendete Seite des Aufbaues 1, schallabsorbierendes Material, z.B. geschäumten Kunststoff, Steinwolle od.dgl. als Material für die Ausfüllung der Hohlräume der Reifensektoren 4 und bzw. oder der Hohlräume der Traggerüste 3 zu verwenden. Dieses Material kann mit einem für den Wuchs der Begrünung geeigneten Material vermischt sein, um auch an dieser Seite Begrünung zu erhalten, zwingend ist dies jedoch nicht, da nicht alle Reifensektoren begrünt sein müssen.

Der Schutzaufbau 1 kann auch für Sonderzwecke ausgenützt werden. Ein solcher Sonderzweck besteht in der Nutzbarmachung von Erdwärme. Hierzu können, wie Fig.3 zeigt, im Inneren des Schutzaufbaues 1 odere seiner von den Verkleidungselementen gebildeten Vorsatzschale Rohre 65, z.B. in Form von Heizschlangen, eingebettet sein, durch welche ein Heizmedium geleitet ist, das durch Erdwärme in an sich bekannter Weise erwärmt wird.

Eine andere Möglichkeit besteht in der Anordnung zusätzlicher Schallabsorptionselemente 66 (Fig.3). Eine bevorzugte Bauweise besteht hierbei darin, diese Elemente in Form von Trapezblechen 67 auszubilden, welche abgewinkelt an der Oberseite des Schutzaufbaues 1 befestigt sind. Der horizontal liegende Trapezblechbereich kann hierbei eine Verteilerrinne 68 für die Bewässerung, z.B. für Regenwasser, bilden. Der schräg verlaufende Restteil des Trapezbleches 67 ist der Lärmquelle zugewendet und ist an seiner Unterseite mit einer Schicht 69 aus schallabsorbierendem Material als zusätzlicher Schallschutz versehen. Als solches Material eignet sich insbesondere geschäumter Kunststoff, welcher als gelochter Schallschutzkörper ausgebildet ist, gepreßte Steinwolle oder schichtenweise angeordnete Glasvliesbahnen, die mit einem Bindemittel verstärkt sind. An die Verteilerrinne können Schläuche 70 angeschlossen sein, durch welche Wasser zu den unteren Abschnitten des Schutzaufbaues 1 geleitet wird. Solche Schläuche 70 können von gebrauchten Schläuchen aller Art, z.B. gebrauchten Feuerwehrschläuchen, gebildet sein, da eine völlige Dichtheit nicht erforderlich ist.

Ein weiterer Sonderzweck besteht darin, daß in das Innere des Schutzaufbaues Versorgungsleitungen, insbesondere elektrische Leitungen und bzw. oder Kabelkanäle eingebettet sind, vorzugsweise im schüttbaren Material der Abstützung 6. Ein solcher Kabelkanal 71 ist in Fig. 29 dargestellt.

Ferner besteht die Möglichkeit, zusätzliche Lärmschutzpaneele 72 vorzusehen. Dies ist in Fig.23 dargestellt, die Lärmschutzpaneele sind zweckmäßig auf der Hinterseite der Reifensektoren 4 angeordnet und können in das Material der Traggerüste 3 eingebettet sein (Fig.23).

Ferner können Belüftungsleitungen 73 vorgesehen sein, mit welchen Luft zum Material der Abstützung 6 zugeleitet werden kann und bzw. oder zu dem für den Wuchs der Bepflanzung 10 verwendeten Material. Diese Belüftungsleitungen 73 können an Ventilatoren angeschlossen sein, mit welchen Abluft von Verkehrswegen in die Belüftungsleitungen 73 eingeleitet wird.

Zusätzliche Bewässerungsleitungen 74 (Fig.9) können vorgesehen sein, um Wasser dem für den Wuchs der Bepflanzung 10 verwendeten Material zuzuführen. Diese Bewässerungsleitungen können aus Altmaterial, z.B. Recyclingkunststoff, bestehen, aber auch von gebrauchten, ausgesonderten Feuerwehrschläuchen gebildet sein. Die Bewässerungsleitungen können an Wasserbehälter 75 angeschlossen sein, welcher im Inneren des Schutzaufbaues 1 angeordnet ist, vorzugsweise eingebettet in das Material der Abstützung 6. Von diesem Wasserbehälter 75 kann das Wasser zu den höher gelegenen Bereichen des Schutzaufbaues 1 hochgepumpt werden oder es kann dieser Wasserbehälter 75 als Hochbehälter ausgebildet werden, welcher insbesondere zur Sammlung von Regenwasser dient. Gegebenenfalls kann auch das außerhalb der Schutzaufbaubereiche anfallende Regenwasser über Zuleitungen und Pumpen zugeleitet werden. In diesem Fall empfiehlt sich jedoch eine Filteranlage zur Reinigung des Wassers.

Weiters besteht die Möglichkeit, im Schutzaufbau 1 Zuleitungen 76 für Erdfeuchtigkeit anzuordnen.

Auch Einrichtungen zur Erzeugung von Sonnenenergie, z.B. Sonnenpaneele 77 (Fig.1,3) können vorgesehen sein. Die hiermit erzeugte Energie kann ausgenützt werden, um die Pumpen der Bewässerungsanlagen und bzw. oder elektrisch betriebene Werbeanlagen zu speisen.

Anwendungsgebiete für Schutzaufbauten der erfindungsgemäßen Art sind u.a.: Begrünungen von Bauwerken, Gartenbegrenzungen, Wände um Schießplätze, Tarnungswände, Splitterschutzwände, Schutzaufbauten zur Vermeidung von Bodenerosion, insbesondere zwecks Aufforstung von Karstgebieten, Lawinenverbauungen, Verkleidung von Hängen, Sicherungen gegen Hangrutschungen, Sicherungen von Uferböschungen, Rückbauten für Verkehrsflächen, Abgrenzungen von Verkehrsflächen, welche von verschiedenen Teilnehmern benützt werden, Verkleidungen von Wänden aller Art, Verkleidungen von Leitschienen und anderen Fahrbahnbegrenzungen, und viele andere Anwendungszwecke.

Anstelle der Reifensektoren können schalenförmige Elemente aus einem anderen Material, insbesondere Problemmaterial, treten, z.B. Skischuhe, aus mit einem Bindemittel getränktem Stroh gebildete schalenförmige Elemente, gepreßter Karton bzw. Papierabfälle in Schalenform, Altkunststoff, gegebenenfalls Recyclingkunststoff, als Schalen ausgebildet, Glasvliesteile in Schalenform, mit einem Härter getränkte Fassadennetze in Schalenform, Leichtbetonschalen, gegebenenfalls mit Schaumstoffeinlagen. Diese Schalen wären zweckmäßig - ebenso wie die Reifensektoren - mit Lochungen zur Verbesserung der Schallabsorption bzw. Öffnungen zum Einsetzen der Bepflanzung zu versehen. Für solche schalenförmige Elemente, welche gegebenenfalls durch einen Gußvorgang unter Verwendung von Formen hergestellt werden, besteht die Möglichkeit, die Öffnungen für die Pflanztöpfe dadurch herzustellen, daß die Pflanztöpfe als Bestandteil der Form, verwendet werden.

Fig.41 zeigt im Grundriß und in Ansicht eine Ausführungsvariante, bei welcher an einer Vorsatzschale 81 des Schutzaufbaues, welche von einem Verkleidungselement der früher beschriebenen Art gebildet sein kann, eine schalldämpfende Schicht 82 an der vom schallbeaufschlagten Seite angeordnet ist, in welche Schicht Dosen 83 eingebettet sind, so, daß man die Produktaufschriften 84 (siehe die Ansichtsdarstellung der Fig.41) lesen kann. Dadurch lassen sich Werbeeffekte erreichen. Wie bereits erwähnt, lassen sich diese Werbeaufschriften nach einer vorbestimmbaren Zeit dadurch unsichtbar machen, daß sie von der Begrünung überwuchert werden.

Fig.42 zeigt eine Variante dazu. Wie die links stehende Grundrißdarstellung zeigt, sind an der schalldämpfenden Schicht 82, welche auf die Vorsatzschale 81 aufgebracht ist, abgespielte Tennisbälle 85 befestigt, z.B. durch Einbettung in die Schicht 82 (linke Darstellung der Fig.42, oben), oder durch Befestigung, z.B. Anklebung oder Nagelung. Diese Tennisbälle 85 können einzeln angeordnet sein, was in der rechten Ansichtsdarstellung der Fig.42 oben dargestellt ist, oder sie können einen geschlossenen Verband darstellen, was in der rechten Darstellung der Fig.42 unten veranschaulicht ist. Diese Tennisbälle 85 können, ebenso wie die Seitenwände der Dosen 83 (Fig.41) Lochungen aufweisen, um das schalldämmende Verhalten zu verbessern. Die Dosen 83 (Fig.41) weisen die offene Seite nach oben auf und können eine Befüllung aufweisen, z.B. aus schalldämmendem oder schallabsorbierendem Material, oder einem für den Wuchs einer Begrünung geeignetem Material.

Die Fig.43 zeigt links im Grundriß und rechts in Ansicht die Verwendung von Skischuhen 86, die zusammen mit einer schalldämpfenden Schicht 82 an der Vorsatzschale 81 befestigt sind. Die Skischuhe 86 können so angeordnet sein, daß der Fersenbereich 87 der Schallquelle zugewendet ist. Um eine zusätzliche Geräuschdämpfung zu erzielen, kann dieser Fersenbereich 87 mit einer Lochung 88 versehen sein. Die Hohlräume 89 der Skischuhe 86 können als Töpfe für die Bepflanzung dienen.

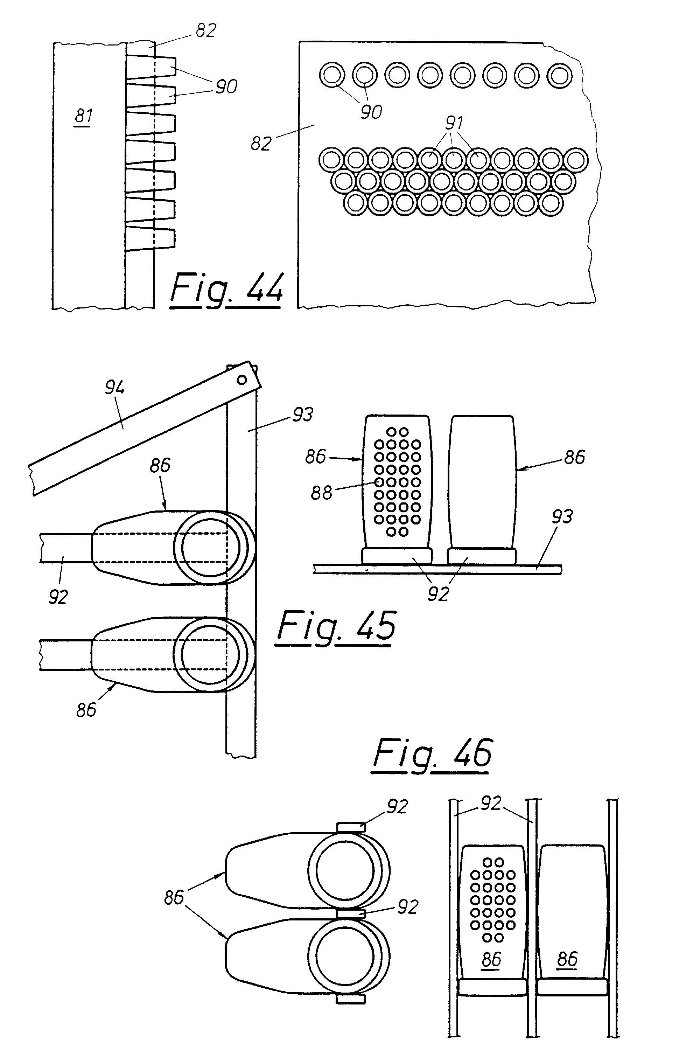

Fig.44 zeigt links im Grundriß und rechts in Ansicht eine Variante, bei welcher an der schalldämpfenden Schicht 82 der Vorsatzschale 81 alte Filmrollen 90 bzw. deren Behälter und bzw. oder Nahrungsmittelbecher 91, z.B. Joghurtbecher, befestigt sind. Auch hier kann die Anordnung dieser schalldämpfenden Bauteile im gegenseitigen Abstand oder in dichter Packung erfolgen.

Die Fig.45 zeigt links im Grundriß und rechts in Ansicht die Verwendung von Skischuhen 86, welche auf Skis 92 befestigt sind, z.B. mittels der üblichen Bindung. Auch hier können die Skischuhe 86 mit einer Lochung 88 versehen sein, Weitere Skis 93 bzw. 94 bilden eine Horizontal- bzw. Diagonalversteifung.

Bei der Ausführungsvariante nach Fig.46 sind die Skischuhe 86 zwischen hochkant gestellten, vertikal verlaufenden Skis 92 angeordnet und daran befestigt.

Bei der Ausführungsvariante nach Fig.47, welche links einen Grundriß und rechts eine Ansicht zeigt, sind die Skischuhe 86 mit Durchbrechungen 95 der Sohle versehen, welche Durchbrechungen von den Skis 92 durchsetzt sind, so daß die Skischuhe 86 gleichsam auf die Skis 92 aufgesteckt sind. Wie die linke Darstellung zeigt, sind zweckmäßig zwei Durchbrechungen pro Skischuh 86 vorgesehen, deren eine, in der Draufsicht auf den Skischuh 86 gesehen, im Bereich der Fußöffnung 96 des Skischuhes 86 liegt, so daß hier nur die Sohle des Skischuhes durchlocht werden muß. Die andere Durchbrechung 95 ist im Ristbereich des Skischuhes 86 angeordnet. Hier muß der Ristbereich und die Sohle durchlocht werden. Wie gezeigt, müssen die Skis 92 nicht stets gleich angeordnet sein, sie können vielmehr sowohl die Laufflächen- als auch die Deckseite als auch die Kantenseite der Schallquelle zuwenden. Besonders günstig ist es, die Lauffläche nach außen zu richten, da auf diese Weise die dort angebrachten Firmeninschriften werbemäßig genutzt werden können.

Bei der Ausführungsform nach Fig.48, welche einen Querschnitt zeigt, sind zu beiden Seiten des Schutzaufbaues Verkleidungselemente 2 vorgesehen, welche jeweils eine Vorsatzschale 81 bilden. Im Inneren des Schutzaufbaues ist ein schüttbares Material 97 angeordnet, welches Problemstoffe enthält, die verschmutzt sind, so daß dieses Material möglichst nicht mit der Umgebung in Kontakt treten soll. Um diesen Kontakt zu verhindern, liegt zwischen der vom Material 97 gebildeten Beschüttung und den beiden Vorsatzschalen 81 sowie unten am Boden eine Trennschicht 98, die feuchtigkeits- und so chemikaliendicht ist, daß die Verschmutzungen der Beschüttung 97 nicht in die Umwelt gelangen können.

Die Ausführungsform nach Fig.49 zeigt eine Konstruktion, welche zur Ausnutzung von Sonnenenergie dient. An der Vorsatzschale 81 ist hierzu eine wärmeleitfähige, die Sonnenenergie möglichst stark absorbierende Schicht 99 befestigt. In diese Schicht 99 sind Heizschlangen 100 eingebettet. Das in diesen Heizschlangen 100 fließende Wärmeträgermedium wird von der von der Schicht 99 aufgenommenen Sonnenenergie erwärmt. Um den Effekt zu erhöhen, ist die Außenfläche 101 der Schicht 99 in dunkler Farbe gehalten. Zusätzlich hierzu können in die Schicht 99 Hohlkörper, z.B. gelochte Dosen 83 oder längsaufgeschnittene Skischuhe, eingebettet sein, die teilweise aus der Schicht 99 hervorragen und mit wärmeabsorbierendem Granulat gefüllt sind. Dadurch wird die wirksame Fläche, welche der Sonneneinstrahlung ausgesetzt ist, vergrößert. Hierdurch kann - falls gewünscht - folgender neuer Effekt erzielt werden: Im Sommer, wenn die Ausnützung der Sonnenenergie, z.B. zur Warmhaltung des Bewuchses des Schutzaufbaues, nicht erforderlich ist, deckt der Bewuchs die Außenfläche 101 der Schicht 99 sowie die Dosen 83 ab. Handelt es sich nicht wintergrüne Pflanzen, so entfällt im Winter durch das fehlende Blattwerk die Abdeckung der Schicht 99 und der Dosen 83, so daß diese Bauteile der Sonneneinstrahlung ausgesetzt werden und die dadurch gewonnene Energie für nutzbare Zwecke verwendet werden kann.

Die Fig.50 zeigt schematisch, wie ein ganzer Skischuh 86 (obere Darstellung) in einzelne Teile 102 (untere Darstellung) aufgeschnitten werden kann, die einzeln als Hohlkörper im Sinne der Erfindung Verwendung finden können, gegebenenfalls mit einer Lochung 88 versehen.

Fig.51 zeigt eine Variante hierzu: Der Skischuh 86 wird hierbei in seiner Längsrichtung durch einen Vertikalschnitt in zwei Teile 102 getrennt.

Bei der Ausführungsvariante nach Fig. 52 wird nicht nur der Skischuh 86 als ganzes verwendet, sondern es kann - falls gewünscht - aus dem Skischuh 86 zunächst der Innenteil 103 herausgenommen und gesondert als Hohlkörper verwendet werden. Dies kann geschehen durch Anordnung einer Lochung 88 (mittlere Darstellung der Fig.52), wodurch der Innenteil 103 geräuschdämpfend wirkt. Zusätzlich oder alternativ hierzu läßt sich der Innenteil 103 als Aufnahmebehälter für die Erde einer Begrünung 104 verwenden. Durch die Lochung 88 wird diese Erde belüftet und es kann überschüssiges Wasser abrinnen.

Die Ausführungsform nach Fig. 53 zeigt, wie mit einer Begrünung 104 versehene Elemente 105 ausgebildet sein können. Hierzu ist es zweckmäßig, diese Elemente 105 auf dem Naturboden 106 liegend vorzusehen und aus guter Erde (Humus) auszubilden. Die in Reihen eingesetzten Begrünungen 104 können in Hohlkörper der zuvor beschriebenen Art in das Element 105 eingesetzt werden, welches dann als ganzes, zweckmäßig in einer geeigneten Abstützung, an die Verwendungsstelle transportiert werden kann.

Die Ausführungsvariante nach Fig. 54 zeigt Altreifenteile 107, die an beliebigen Bauteilen des Traggerüstes 3 befestigt sind. Dies geschieht dadurch, daß die beiderseits der Lauffläche 109 liegenden Reifenflanken 108 aufgeschnitten werden und die so entstehenden Lappen am Traggerüst 3 od.dgl. befestigt werden. Durch die zwischen einander benachbarten Lappen der aufgeschnittenen Reifenflanken 108 werden Hohlräume 110 begrenzt, welche Pflanzlöcher für die Begrünung bilden. Eine Lochung 111 der Reifenflankenabschnitte 108 erleichtert der Begrünung das Durchwachsen.

Wie gezeigt, können die lappenförmigen Teile der Reifenflanken benachbarter Reifen einander überlappend am Traggerüst 3 befestigt sein.

Fig.55 zeigt im Grundriß und Fig.56 in Ansicht die Befestigung von untereinander zusammenhängenden Reifensektoren 4 an Skis 92, die einen Teil des Traggerüstes 3 für die Reifensektoren 4 bilden. Die von untereinander zusammenhängenden Reifensektoren 4 gebildete Kette liegt hierbei horizontal, die Skis 92 verlaufen vertikal und sind so angeordnet, daß die auf den Skis befindliche Firmenbezeichnung zu Werbezwecken sichtbar bleibt. Zwischen einander benachbarten, übereinander liegenden Schichten der Reifensektoren 4 können Pflanzlöcher 112 vorgesehen sein.

Eine Variante hierzu zeigen die Fig. 57 im Grundriß und 58 in Ansicht. Hier stehen die Skis 92 auch vertikal, jedoch so, daß die Seitenkanten nach außen und nach innen weisen. Dadurch wird der Begrünung mehr Platz für das Durchwachsen gelassen.

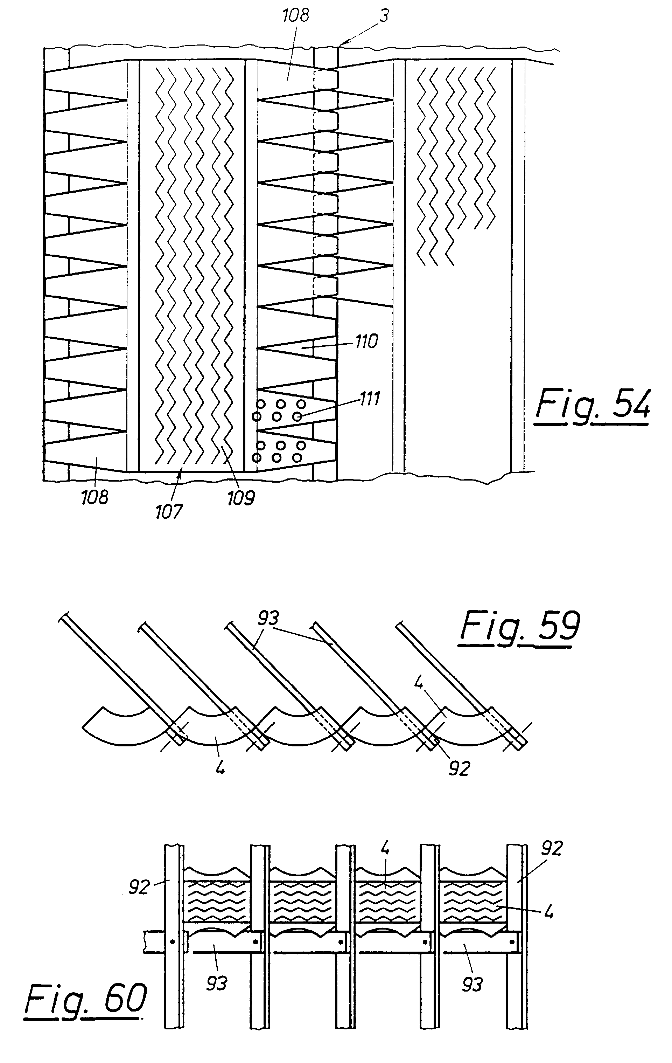

Die Ausführungsvariante nach den Fig. 59 (Grundriß) und 60 (Ansicht) zeigt ebenfalls Reifensektoren 4, die untereinander zusammenhängen und durch vertikal verlaufende Skis 92 in vertikaler Richtung abgestützt sind, wobei weitere Skis 93 horizontal, schräg, verlaufende Querverbindungen bilden. Dadurch wird die Konstruktion abgesteift.

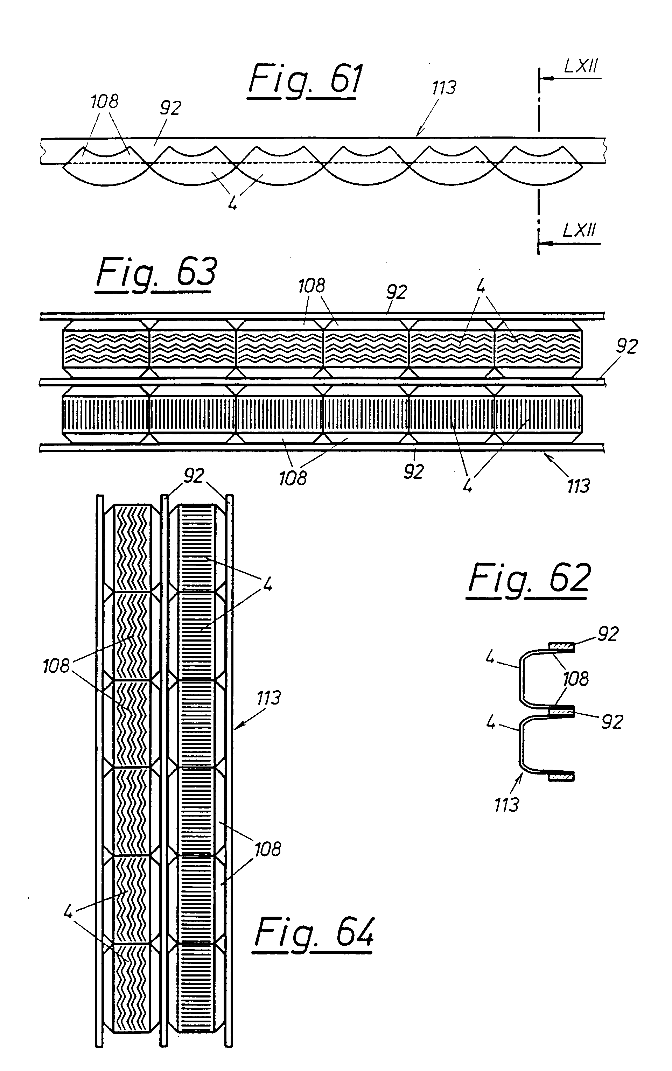

Eine Variante hierzu ist in den Fig.61 bis 63 dargestellt, wobei Fig.61 diese Variante im Grundriß und Fig.63 diese Variante in Ansicht darstellt. Fig.62 ist ein Schnitt nach der Linie LXII - LXII der Fig. 61. Diese Ausführungsvariante zeigt vorgefertigte Elemente 113, bei denen horizontal und parallel zueinander verlaufende Skis 92 vorgesehen sind, an denen die Reifenflanken 108 der gegebenenfalls untereinander zusammenhängenden Reifensektoren 4 befestigt sind, z.B. durch Schraubung, Dübel od.dgl. Diese Elemente 113 können im Werk vorgefertigt werden und dann im vorgefertigten Zustand an die Baustelle transportiert und dort versetzt werden.

Fig.64 zeigt eine Alternative hierzu. Die Elemente 113 sind hier an sich in gleicher Weise ausgebildet, wie dies bei der Variante nach den Fig.61 bis 63 der Fall ist, jedoch werden die fertigen Elemente 113 an der Baustelle derart verlegt, daß die Skis 92 vertikal stehen.

## Patentansprüche

1. Schutzaufbau (1), welcher auf seinen beiden Seiten je zumindest ein Verkleidungselement (2) aufweist, welches ein Traggerüst (3) besitzt, an welchem zumindest einseitig offene Hohlkörper befestigt sind, wobei zumindest einige der von diesen Hohlkörpern gebildeten Hohlräume zumindest ein für den Wuchs einer Bepflanzung (10) geeignetes Material enthalten, und wobei für die beiderseitigen Verkleidungselemente (2) eine zwischen ihnen angeordnete, auf dem Boden aufliegende oder mit dem Boden verbundene Abstützung (6) vorgesehen ist, deren normal zur Aufbauebene gemessene größte Breite größer ist als die in der gleichen Richtung gemessene Tiefe eines Verkleidungselementes (2), und wobei diese Abstützung (6) zumindest teilweise aus schüttbarem Material besteht, dadurch gekennzeichnet, daß zumindest das schüttbare Material der Abstützung (6) zumindest einen Problemstoff enthält und daß in der Abstützung (6) Verbindungselemente (8) für die beidseitigen Verkleidungselemente (2) angeordnet sind, die in das schüttbare Material eingebettet sind und mit den Verkleidungselementen (2) derart verbunden sind, daß die beidseitigen Verkleidungselemente (2) zumindest im Bodenbereich des Schutzaufbaues (1) zugschlüssig miteinander verbunden sind, wobei die Verbindungselemente (8) und/oder die Verkleidungselemente (2) Problemmaterial enthalten, das von Altreifen abweicht und aus dem starren Zustand seines Anfallens nicht oder nicht wesentlich verändert ist.

2. Zumindest einseitig bepflanzbarer Schutzaufbau (1), bei welchem an zumindest einer Seite einer starren, mit dem Boden (7) verbundenen Abstützung (6) zumindest ein Verkleidungselement (2) vorgesehen ist, welches ein Traggerüst (3) aufweist, an welchem zumindest einseitig offene Hohlkörper befestigt sind, wobei zumindest einige der von diesen Hohlkörpern gebildeten Hohlräume zumindest ein für den Wuchs einer Bepflanzung (10) geeignetes Material enthalten, dadurch gekennzeichnet, daß zumindest im unteren Bereich der Abstützung (6) die Verkleidungselemente im Abstand von der Abstützung (6) angeordnet sind und daß der verbleibende Zwischenraum mit schüttbarem Material ausgefüllt ist, wobei zumindest dieses schüttbare Material zumindest einen Problemstoff enthält und daß in dieses schüttbare Material Verbindungselemente (8) eingebettet sind, mit welchen zumindest im unteren Bereich der Abstützung (6) zumindest ein Verkleidungselement (2) in seinem unteren Bereich zugschlüssig mit der Abstützung (6) verbunden ist, wobei die Verbindungselemente (9) und/oder die Verkleidungselemente (2) Problemmaterial enthalten, das von Altreifen abweicht und aus dem starren Zustand seines Anfallens nicht oder nicht wesentlich verändert ist.

3. Schutzaufbau nach Anspruch 1 oder 2, dadurch gekennzeichnet, daß die Abstützung (6) einen bestehenden Aufbau, einen Hang, eine Böschung (16), einen Lärmschutz- oder Winderosionsdamm oder eine Uferböschung mit einschließt, wobei verbleibende Hohlräume (9') mit Problemstoffmaterial und bzw. oder Abraum aus dem bestehenden Aufbau ausgefüllt sind und der Anschluß des Schutzaufbaus mittels Zugankern erfolgt.

4. Schutzaufbau nach einem der Ansprüche 1 bis 3, dadurch gekennzeichnet, daß die Hohlkörper von Reifensektoren (4) und bzw. oder Dosen (83) und bzw. oder Skischuhen (86) gebildet sind.

5. Schutzaufbau nach Anspruch 4, dadurch gekennzeichnet, daß die Hohlkörper gelocht sind.

6. Schutzaufbau nach Anspruch 5, dadurch gekennzeichnet, daß Reifensektoren (4) an den Seitenflanken gelocht sind.

7. Schutzaufbau nach einem der Ansprüche 1 bis 6, dadurch gekennzeichnet, daß das Problemmaterial der Verbindungselemente (8) und bzw. oder der Verkleidungselemente (2) von Schiern (92,93,94), Schischuhen (86) oder Dosen (83) gebildet ist.

8. Schutzaufbau nach einem der Ansprüche 1 bis 7, dadurch gekennzeichnet, daß die Abstützung (6) zur Horizontalen geneigte, den Verkleidungselementen zugewendete Begrenzungsflächen hat und daß auch die Verkleidungselemente (2) geneigt angeordnet sind.

9. Schutzaufbau nach einem der Ansprüche 1 bis 8, dadurch gekennzeichnet, daß er eine Aufstockung (14) eines bestehenden Aufbaues bildet.

10. Schutzaufbau nach einem der Ansprüche 1 bis 9, dadurch gekennzeichnet, daß die Verkleidungselemente (2) auf den beiden Seiten der Abstützung (6) auf unterschiedlicher Höhe angeordnet sind.

11. Schutzaufbau nach einem der Ansprüche 1 bis 10, dadurch gekennzeichnet, daß er im Querschnitt treppenförmige Gestalt hat, wobei die nach oben gerichteten Oberflächenbereiche (23) Bewirtschaftungsflächen bilden.

12. Schutzaufbau nach Anspruch 11, dadurch gekennzeichnet, daß die Verkleidungselemente (2) selbsttragende übereinander angeordnete miteinander verbundene Traggerüste (3) haben, die treppenartig angeordnet sind und bzw. oder die Hohlkörper unterschiedlicher Größe aufweisen, wobei für Reifensektoren (4) diese unterschiedliche Größe durch Verwendung von Altreifen unterschiedlicher Größe und bzw. oder durch unterschiedlich große Sektorwinkel der Reifensektoren (4) erzielt ist.

13. Schutzaufbau nach einem der Ansprüche 1 bis 12, dadurch gekennzeichnet, daß die Hohlkörper der Verkleidungselemente (2) zumindest ein Problem material der in Anspruch 1 genannten Art enthalten.

14. Schutzaufbau nach Anspruch 13, dadurch gekennzeichnet, daß die Hohlkörper Aufschriften tragen, die der Außenseite des Schutzaufbaues (1) zugekehrt sind, wobei im Inneren der Hohlkörper zumindest ein schallabsorbierendes Material (66) vorhanden ist.

15. Schutzaufbau nach einem der Ansprüche 1 bis 14, dadurch gekennzeichnet, daß die Abstützung (6) starre Versteifungselemente (9) enthält, die aus Problemmaterial der in Anspruch 1 genannten Art besteht.

16. Schutzaufbau nach Anspruch 15, dadurch gekennzeichnet, daß die starren Versteifungselemente (9) die zu beiden Seiten des Schutzaufbaues (1) angeordneten Verkleidungselemente (2) drucksteif verbinden.

17. Schutzaufbau nach Anspruch 15 oder 16, dadurch gekennzeichnet, daß die Versteifungselemente (9) im Boden (7) verankerte, bereits bestehende und bzw. oder in den Boden eingerammte Steher aufweisen.

18. Schutzaufbau nach einem der Ansprüche 15 bis 17, dadurch gekennzeichnet, daß die Versteifungselemente (9) ein starres Gerüst in Rahmen- oder A-Form, bilden, an dem im Boden zu verlegende Ankerelemente (25) befestigt sind.

19. Schutzaufbau nach einem der Ansprüche 15 bis 18, dadurch gekennzeichnet, daß die Versteifungselemente (9) horizontal oder vertikal und parallel zueinander verlaufende Montageleisten (26) in Form von mit Profilierungen (27) versehenen Schienen aufweisen, zwischen welche die Traggerüste (3) der Verkleidungselemente (2) mit den Profilierungen (27) der Montageleisten (26) entsprechenden Profilierungen (28) eingesetzt sind.

20. Schutzaufbau nach einem der Ansprüche 15 bis 19, dadurch gekennzeichnet, daß die Abstützung (6) Hohlräume (5) zwischen den Versteifungselementen (9) enthält, die mit dem schüttbaren, zumindest einen Problemstoff enthaltenden Material ausgefüllt sind.

21. Schutzaufbau nach einem der Ansprüche 1 bis 20, dadurch gekennzeichnet, daß Steckverbindungen (29) für den Anschluß der starren Versteifungselemente (9) aneinander und bzw. oder zur Befestigung der Hohlkörper an den Traggerüsten (3) und bzw. oder zur Befestigung der Verkleidungselemente (2) an der Abstützung (6) und bzw. oder zur Befestigung des aufzustockenden Schutzaufbaues (1) vorgesehen sind.

22. Schutzaufbau nach einem der Ansprüche 1 bis 21, dadurch gekennzeichnet, daß zur Verbindung von Versteifungselementen (9) und bzw. oder Hohlkörpern mit dem Traggerüst (3) korrosionsfeste Dübel, Keile (31), Klammern oder Nieten dienen.

23. Schutzaufbau nach einem der Ansprüche 1 bis 22, dadurch gekennzeichnet, daß sich unter der Abstützung (6) eine Wanne (35) aus dichtem korrosionsbeständigem Material befindet, deren in Längsrichtung des Schutzaufbaues (1) verlaufende Abschnitte an ihren Stoßstellen oder Anschlüssen an die Abstützung (6) durch eine Profilierung abgedichtet sind.

24. Schutzaufbau nach einem der Ansprüche 1 bis 23, dadurch gekennzeichnet, daß korrosionsbeständige Befestigungsmittel für die Befestigung der Hohlkörper und bzw. oder zur Befestigung der Traggerüste (3) an der Abstützung (6) und bzw. oder an den Verbindungselementen (9) in das Material der Traggerüste (3) bzw. der Abstützung (6) bzw. der Verbindungselemente (8) eingegossen sind und daß an diesen Befestigungsmitteln Abzugssicherungen für die befestigten Konstruktionsteile vorgesehen sind, nämlich Splinte oder Umbiegungen von Dornen.

25. Schutzaufbau nach einem der Ansprüche 1 bis 24, dadurch gekennzeichnet, daß die Traggerüste (3) Steher (37) aufweisen, auf welche die mit Öffnungen (38) versehenen Hohlkörper aufgesteckt sind, wobei die Öffnungen (38) größer sind als der Querschnitt der Steher (37).

26. Schutzaufbau nach einem der Ansprüche 1 bis 25, dadurch gekennzeichnet, daß die Traggerüste (3) der Verkleidungselemente (2) eine Schalung für das schüttbare Material der Abstützung (6) bilden, wobei das Traggerüst (3) auf der Innenseite mit einer das schüttbare Material von dem für den Wuchs der Bepflanzung (10) dienenden Material trennenden Schicht versehen ist und bzw. oder daß das Traggerüst (3) mit den Hohlkörpern außen und innen in eine Schichte aus schallabsorbierendem und bzw. oder wärmedämmendem oder wärmeleitendem Material eingebettet ist.

27. Schutzaufbau nach Anspruch 26, dadurch gekennzeichnet, daß die zu beiden Seiten der Schalung liegenden Hohlräume mit schüttbarem Material unterschiedlicher Beschaffenheit ausgefüllt sind, und zwar an der Schallseite des Aufbaues mit schallabsorbierendem Material.

28. Schutzaufbau nach einem der Ansprüche 1 bis 27, dadurch gekennzeichnet, daß an zumindest einem Traggerüst (3) mehrere Reifensektoren (4) flachgezogen befestigt sind.

29. Schutzaufbau nach Anspruch 28, dadurch gekennzeichnet, daß das Traggerüst (3) aus horizontal und bzw. oder vertikal verlaufenden Skis (92,93,94) besteht.

30. Schutzaufbau nach einem der Ansprüche 1 bis 29, dadurch gekennzeichnet, daß an zumindest einem Verkleidungselement (2) Hohlkörper in ein härtbares Material des Traggerüstes (2) eingegossen sind.

31. Schutzaufbau nach einem der Ansprüche 1 bis 30, dadurch gekennzeichnet, daß an der Innenseite und bzw. oder der Außenseite der Hohlkörper Beschichtungen (42) in Form einer. gelochten Schichte aus schallabsorbierendem und zugleich wärmedämmendem oder wärmeleitendem Material, und bzw. oder Folien, bzw. Vliese, die mit einer Lochung versehen sind und bzw. oder gebrauchte Fassadennetze in zumindest einer Lage zur Erhöhung der Schallabsorption vorgesehen sind.

32. Schutzaufbau nach einem der Ansprüche 4 bis 31, dadurch gekennzeichnet, daß an zumindest einem Verkleidungselement (2) die oben angeordneten Reifenflanken der obersten Reifensektoren (4) entfernt sind.

33. Schutzaufbau nach einem der Ansprüche 4 bis 32, dadurch gekennzeichnet, daß an zumindest einem Verkleidungselement (2) zumindest zwei Lagen von Reifensektoren (4) vorgesehen sind, bei denen die Laufflächen nach unterschiedlichen Seiten sehen.

34. Schutzaufbau nach einem der Ansprüche 4 bis 33, dadurch gekennzeichnet, daß an zumindest einigen Reifensektoren (4) die Felgenbereiche entfernt sind, so daß nur die Laufflächenbereiche, gegebenenfalls mit den ihnen benachbarten Flankenbereichen, an den Traggerüsten (3) befestigt sind.

35. Schutzaufbau nach einem der Ansprüche 1 bis 34, dadurch gekennzeichnet, daß zumindest ein Traggerüst (3) eine Profilierung (46) hat, die in eine entsprechende Profilierung eines Versteifungselementes (9) der Abstützung (6) und bzw. oder eines anderen Traggerüstes (3) und bzw. oder in eine Montageleiste paßt.

36. Schutzaufbau nach einem der Ansprüche 1 bis 35, dadurch gekennzeichnet, daß die Traggerüste (3) der Verkleidungselemente (2) armierte Profilstäbe aus Recycling kunststoff aufweisen.

37. Schutzaufbau nach einem der Ansprüche 1 bis 36, dadurch gekennzeichnet, daß zumindest einige Verkleidungselemente (2) und bzw. oder die Abstützung (6) eine Stahlversteifung aufweisen, die mit einem Korrosionsschutz versehen ist.

38. Schutzaufbau nach einem der Ansprüche 1 bis 37, dadurch gekennzeichnet, daß das schüttbare Material Stahlabfälle, Kunststoffabfälle in zerkleinerter Form, Schaumstoffe, gepreßtes verklebtes Stroh, Glasfaservliesteile, Kompost, Klärschlamm, Gülle, Hochofenschlacke, Zellstoffabfälle, Gleisschotter, Holzschnitzel, Tonkugeln, Sand Kies, Gras, Gesträuch, Häckselgut, Papier- oder Kartonabfälle, Gesteinsmehl, Lehm, zerkleinerter Müll, Lavagestein, Asche, synthetische oder natürliche Fasem, Bodenaushubmaterial, Restbetonabfall, Tunnelausbruchmaterial oder Bauschutt enthält.

39. Schutzaufbau nach Anspruch 38, dadurch gekennzeichnet, daß das schüttbare Material Zusätze von Wachstumsverbesserern für die Begrünung, Feuchtigkeitsspeichermitteln, Korrosionsschutzmitteln oder fäulnishemmenden Mitteln enthält, wobei eine dichte Schichte zur Trennung verschmutzten Schüttmateriales von reinem Schüttmaterial vorhanden ist.

40. Schutzaufbau nach einem der Ansprüche 1 bis 39, dadurch gekennzeichnet, daß als Problemmaterial in den Versteifungselementen (9) der Abstützung (6) und bzw. oder in den Traggerüsten (3) und bzw. oder in den Verbindungselementen Schienen (59), Eisenbahnschwellen, Trapezbleche, Spundwände, Leitschienen, Gleisabschnitte (58) (mit den Schienen verbundene Schwellen, welche horizontal oder vertikal angeordnet sind), Kunststoffprofile aus Recyclingkunststoff, Sportartikel, nämlich Ski (92,93,94), Surfboards, Tennisschläger, Holzteile nämlich Telegrafen- oder Strommasten oder Abfallholz, in Formen verpreßte Leder- und Aluminiumabfälle, hohle ausgegossene Bauteile, Glasvliesteile, Stahlseile, zerkleinertes und mit Klebemittel gebundenes Stroh, mit Kunstharzen gebundene Schaumstoffe und bzw. oder Kunststoffabfälle und bzw. oder Staub und bzw. oder Schlamm, gewellte Dachdeckungselemente oder zusammenhängende Reifensektoren dienen, wobei korrosionsanfällige Materialien mit einer korrosionshemmenden Imprägnierung und bzw. oder Ummantelung versehen sind.

41. Schutzaufbau nach Anspruch 40, dadurch gekennzeichnet, daß die für die Versteifungselemente (9) bzw. die Traggerüste (3) bzw. die Verbindungselemente (8) bzw. die Hohlkörper verwendeten Bauteile Aufschriften (54) tragen, welche der Außenseite des Schutzaufbaues (1) zugewendet sind oder an dieser Außenseite liegen.

42. Schutzaufbau nach einem der Ansprüche 1 bis 41, dadurch gekennzeichnet, daß er in seinem Inneren eingebettet in das schüttbare Material (97) bzw. im Inneren einer Vorsatzschale (81) aus Hohlkörpern, welche in einer Schichte (82) aus wärmeleiffähigem und hochabsorbierendem Material eingebettet sind, Rohre (65) zur Nutzung von Sonnen-bzw. Erdwärme aufweist.

43. Schutzaufbau nach einem der Ansprüche 1 bis 42, dadurch gekennzeichnet, daß er zusätzliche Schallabsorptionselemente (66) in Form von Trapezblechen (67) aufweist, welche abgewinkelt an der Oberseite des Schutzaufbaues befestigt sind, wobei der horizontal liegende Trapezblechbereich eine unten und bzw. oder seitlich gelochte Verteilerrinne (68) für die Bewässerung des Aufbaues bildet und der schräg verlaufende Oberteil an seiner Unterseite mit schallabsorbierendem Material (69) als zusätzlicher Schallschutz versehen ist.

44. Schutzaufbau nach Anspruch 43, dadurch gekennzeichnet, daß an die Verteilerrinne (68) Schläuche (70) angeschlossen sind, welche zur Zuleitung von Wasser zu den unteren Abschnitten des Schutzaufbaues (1) dienen.

45. Schutzaufbau nach einem der Ansprüche 1 bis 44, dadurch gekennzeichnet, daß die Hohlkörper mit Lärmschutzpaneelen (72) verbunden sind.

46. Schutzaufbau nach einem der Ansprüche 1 bis 45, dadurch gekennzeichnet, daß die Abstützung (6) in Form einer nach oben gerichteten Verlängerung (49) einer bestehenden Abstützung (6) einen mit absorbierendem Material versehenen Schallfang und bzw. oder eine Überdachung von Fahrbahnbereichen oder eine Unterkonstruktion für eine(n) solche(n) bildet.

47. Schutzaufbau nach Anspruch 46, dadurch gekennzeichnet, daß der Schallfang und bzw. oder die Überdachung alte Paneele aufweist, wobei das absorbierende Material gelochte, mit schallabsorbierenden Stoffen gefüllte Dosen aufweist.

48. Schutzaufbau nach einem der Ansprüche 1 bis 47, dadurch gekennzeichnet, daß er in seinem Inneren eingebettet in das schüttbare Material Ver- und bzw. oder Entsorgungsleitungen aufweist.

49. Schutzaufbau nach einem der Ansprüche 1 bis 48, dadurch gekennzeichnet, daß er Belüftungsleitungen (73) zur Zuleitung von Luft zu den Problemstoffen und bzw. oder zu dem für den Wuchs der Bepflanzung (10) geeigneten Material aufweist, welchen Belüftungsleitungen (73) Abluft von Verkehrswegen zugeführt ist.

50. Schutzaufbau nach einem der Ansprüche 1 bis 49, dadurch gekennzeichnet, daß die Bepflanzung (10) in das für ihren Wuchs geeignete Material in Töpfen (60), bzw. Skischuhen (86) bzw. Skischuhteilen, bzw. Nahrungsmittelbechern (91) eingesetzt ist, wobei die Töpfe (60) aus korrosionsbeständigem Problem material bestehen.

51. Schutzaufbau nach Anspruch 50, dadurch gekennzeichnet, daß seitlich aufgeschnittene Töpfe (60) bzw. Nahrungsmittelbecher (91) an der Oberseite durch elastische Bänder (64) zusammengehalten sind.

52. Schutzaufbau nach Anspruch 50 oder 51, dadurch gekennzeichnet, daß die Töpfe (60), Skischuhe (86) oder Skischuhteile in Pflanzlöcher eingesetzt sind und mit ihrem oberen Rand über das Pflanzloch herausragen.

53. Schutzaufbau nach einem der Ansprüche 1 bis 52, dadurch gekennzeichnet, daß die Bepflanzung (10) in Behältern angeordnet ist, die austauschbar im Schutzaufbau (1) angeordnet sind.

54. Schutzaufbau nach einem der Ansprüche 1 bis 53, dadurch gekennzeichnet, daß die Oberflächen des Schutzaufbaues (1) mit einer Abdeckung und bzw. oder Beschichtung (53) in Form zumindest eines Netzes und bzw. oder Vlieses (39) und bzw. oder Folienmateriales versehen sind, wobei diese Abdeckung mit einer entfernbaren Bedruckung (55) und bzw. oder Bemalung versehen ist.

55. Schutzaufbau nach Anspruch 54, dadurch gekennzeichnet, daß zwischen der Abdeckung und der Oberfläche des Schutzaufbaues (1) zusätzliches schallabsorbierendes Material, nämlich geschäumter Kunststoff, zerkleinertes Stroh, Granulate oder zerkleinerte Kunststoffabfälle, eingefüllt ist und bzw. oder auf der Rückseite der Abdeckung eine schallreflektierende Schicht angebracht ist.

56. Schutzaufbau nach einem der Ansprüche 1 bis 55, dadurch gekennzeichnet, daß er Bewässerungsleitungen (74) aus Altmaterial, nämlich Recyclingkunststoff, gebrauchte Feuerwehrschläuchen oder Trapezbleche, enthält.

57. Schutzaufbau nach einem der Ansprüche 1 bis 56, dadurch gekennzeichnet, daß er in seinem Inneren zumindest einen Wasserbehälter (75) aufweist, welchem Wasserbehälter (75) eine Pumpe zur Zuleitung von Regenwasser aus außerhalb des Schutzaufbaues (1) gelegenen Flächenbereichen zugeordnet ist.

58. Schutzaufbau nach Anspruch 57, dadurch gekennzeichnet, daß die Pumpe mit einer Filteranlage zur Reinigung des Wassers kombiniert ist.

59. Schutzaufbau nach einem der Ansprüche 1 bis 58, dadurch gekennzeichnet, daß er in seinem Inneren Zuleitungen für Erdfeuchtigkeit aufweist.

60. Schutzaufbau nach einem der Ansprüche 1 bis 59, dadurch gekennzeichnet, daß er Werbeflächen oder -anlagen in durch die Bepflanzung (10) überwachsbarer Anordnung, und bzw. oder Warnanlagen und bzw. oder Überwachungsanlagen trägt.

61. Schutzaufbau nach einem der Ansprüche 1 bis 60, dadurch gekennzeichnet, daß zumindest einige Verkleidungselemente (2) und bzw. oder einige Abschnitte der Abdeckungen an der Außenseite farblich gestaltet und bzw. oder beleuchtet sind und bzw. oder durch entsprechende Anordnung Zeichen (55) bilden, welche Werbungen bilden.

62. Schutzaufbau nach Anspruch 61, dadurch gekennzeichnet, daß die Zeichen (55) durch die Bepflanzung (10) überwachsbar angeordnet sind.

63. Schutzaufbau nach einem der Ansprüche 1 bis 62, dadurch gekennzeichnet, daß er zumindest ein Aggregat zur Erzeugung von Sonnenenergie, nämlich Solarpaneele (77), zur Stromversorgung von elektrisch betriebenen Werbe- und bzw. oder Bewässerungsanlagen, und bzw. oder eine durch ein Windrad betriebene Wasserpumpe trägt..

64. Schutzaufbau nach einem der Ansprüche 1 bis 63, dadurch gekennzeichnet, daß Glaswände (57) und bzw. oder Lärmschutzfenster (56) eingebaut sind.

65. Schutzaufbau nach einem der Ansprüche 1 bis 64, dadurch gekennzeichnet, daß auch das für den Wuchs der Bepflanzung (10) geeignete Material Problemstoffe enthält, nämlich Kompost, Müll kompost, Gülle, Hochofenschlacke, Zellstoffasern, Klärschlamm oder Schaumstoffteilchen.

66. Verfahren zur Herstellung eines Schutzaufbaues nach einem der Ansprüche 1 bis 65, dadurch gekennzeichnet, daß zumindest Teile des Schutzaufbaues (1), nämlich mit Traggerüsten (3) versehene Vorsatzschalen (81), in fertigem Zustand an den Montageort geliefert werden.

67. Verfahren nach Anspruch 66, dadurch gekennzeichnet, daß ganze Elemente des Schutzaufbaues (1) mit Erde verfüllt, mit Pflanzen bestückt und im begrünten Zustand auf die Baustelle transportiert werden.

## Claims

1. Protective structure (1) having at least one lining element (2) on each side of it which has a supporting framework (3), to at least one side of which open hollow bodies are attached, whereby at least several of the cavities created by these hollow bodies contain at least one material suitable for the growth of plants (10) and whereby an underpinning (6) for the bilateral lining elements (2) is located between them which rests on or is attached to the ground, which underpinning (6) has a maximum width, when measured normally in relation to the plane of the structure, which is greater than the depth of a lining element (2) measured in the same direction, and whereby this underpinning (6) consists at least partially of dumpable material, characterized in that the dumpable material of the underpinning (6) contains at least one problematic material and that the underpinning (6) has connecting elements (8) for the bilaterial lining elements (2) which are imbedded in the dumpable material and which are connected to the lining elements (2) such that the bilaterial lining elements (2) are connected with each other at least in the part of the protective structure (1) near the ground in a way which absorbs tensile loads, whereby the connecting elements (8) and/or the lining elements (2) contain problematic material which differs from scrap tires and whose solid shape at the time of its origin is altered very little or not at all.

2. Protective structure (1) on at least one side of which plants can be planted, which protective structure (1) has at least one lining element (2) on at least one side of a rigid underpinning (6) connected with the ground (7), which lining element (2) comprises a supporting framework (3) to at least one side of which open hollow bodies are attached, whereby at least several of the cavities created by these hollow bodies contain at least one material suitable for the growth of plants (10), characterized in that at least in the lower area of the underpinning (6) the lining elements are positioned at a distance from the underpinning (6) and that the space created thereby is filled with dumpable material, whereby at least this dumpable material contains at least one problematic material, and that this dumpable material has connecting elements (8) imbedded within it with which at least in the lower part of the underpinning (6) at least one lining element (2) is connected in its lower area with the underpinning (6) such that tensile loads which arise are absorbed, whereby the connecting elements (9) and/or the lining elements (2) contain problematic material which differs from scrap tires and whose solid shape at the time of its origin is altered very little or not at all.

3. Protective structure according to claim 1 or 2, characterized in that the underpinning (6) incorporates an already existing structure, a slope, an embankment (16), a fill dam, a noise-protection dam or a wind erosion dam or a river embankment, whereby any remaining cavities (9') are filled with problematic materials and/or excavated material from the existing structure, and the protective structure is connected by means of tension anchors.

4. Protective structure according to one of the claims 1 to 3, characterized in that the hollow bodies are constituted by tire sectors (4) and, respectively, or cans (83) and, respectively, or ski boots (86).

5. Protective structure according to claim 4, characterized in that the hollow bodies are perforated.

6. Protective structure according to claim 5, characterized in that tire sectors (4) are perforated at the side flanks.

7. Protective structure according to one of the claims 1 to 6, characterized in that the problematic material of the connecting elements (8) and, respectively, or of the lining elements (2) is constituted by skis (92, 93, 94), ski boots (86) or cans (83).

8. Protective structure according to one of the claims 1 to 7, characterized in that the underpinning (6) is bordered by areas inclined to the horizontal and facing the lining elements, which lining elements (2) are also positioned to be inclined.

9. Protective structure according to one of the claims 1 to 8, characterized in that it forms an extension (14) to the height of an existing structure.

10. Protective structure according to one of the claims 1 to 9, characterized in that the lining elements (2) on both sides of the underpinning (6) are positioned at different heights.

11. Protective structure according to one of the claims 1 to 10, characterized in that its cross section is step-shaped whereby the surface areas facing upwardly (23) are used for cultivation.

12. Protective structure according to claim 11, characterized in that the lining elements (2) have self-supporting frameworks (3) arranged one above the other and connected with each other, said supporting frameworks (3) being step-likely arranged and/or having hollow bodies of various sizes, whereby for tire sectors (4) this variety in the size is achieved by using scrap tires of different sizes and/or by different sizes of the sector angle of the tire sectors (4).

13. Protective structure according to one of the claims 1 to 12, characterized in that the hollow bodies of the lining elements (2) contain at least one of the problematic materials named in claim 1.

14. Protective structure according to claim 13, characterized in that the hollow bodies carry inscriptions facing the outer surface of the protective structure (1), whereby at least one sound absorbing material (66) is provided inside the hollow bodies.

15. Protective structure according to one of the claims 1 to 14, characterized in that the underpinning (6) contains rigid reinforcement elements (9), consisting of problematic material of the type named in claim 1.

16. Protective structure according to claim 15, characterized in that the rigid reinforcement elements (9) connect the lining elements (2) positioned on either side of the protective structure (1) in a compression-resistant manner.

17. Protective structure according to claim 15 or 16, characterized in that the reinforcement elements (9) have uprights anchored in the ground (7), which are already existing uprights and/or uprights rammed into the ground.

18. Protective structure according to one of the claims 15 to 17, characterized in that the reinforcement elements (9) form a rigid skeleton, in a frame shape or an A-shape, to which anchoring elements (25) to be positioned in the ground are attached.

19. Protective structure according to one of the claims 15 to 18, characterized in that the reinforcement elements (9) have mounting ledges (26) running horizontally or vertically and parallel to each other, and are constituted by rails with contours (27), between which rails the supporting frameworks (3) of the lining elements (2) are placed, which frameworks have contours (28) corresponding with the contours (27) on the mounting ledges (26).

20. Protective structure according to one of the claims 15 to 19, characterized in that the underpinning (6) contains cavities (5) between the reinforcement elements (9) which are filled with dumpable material containing at least one problematic substance.

21. Protective structure according to one of the claims 1 to 20, characterized in that insertable connections (29) are provided to connect the rigid reinforcement elements (9) to each other and/or to fasten the hollow bodies to the supporting frameworks (3) and/or to fasten the lining elements (2) to the underpinning (6) and/or to fasten the protective structure (1) to be heightened.

22. Protective structure according to one of the claims 1 to 21, characterized in that corrosion-proof dowels, wedges (31) clamps or rivets serve to connect reinforcement elements (9) and/or hollow bodies to the supporting framework (3).

23. Protective structure according to one of the claims 1 to 22, characterized in that a trough (35) made of impervious, corrosion-resistant material is placed under the underpinning (6), the sections of which trough (35) running the length of the protective structure (1) are sealed at their joints or points of connection with the underpinning (6), by means of a contour.

24. Protective structure according to one of the claims 1 to 23, characterized in that corrosion-resistant fasteners are cast into the material of the supporting frameworks (3) or of the underpinning (6) or of the connecting elements (8), for the purpose of fastening the hollow bodies and/or of fastening the supporting frameworks (3) to the underpinning (6) and/or to the connecting elements (9) and that these fasteners are provided with means which secure that the components fastened cannot be pulled off, namely cotter pins or bending of arbors.

25. Protective structure according to one of the claims 1 to 24, characterized in that the supporting frameworks (3) have uprights (37) onto which the hollow bodies provided with openings (38) are placed, whereby the openings (38) are larger than the cross section of the uprights (37).

26. Protective structure according to one of the claims 1 to 25, characterized in that the supporting frameworks (3) of the lining elements (2) create a formwork for the dumpable material of the underpinning (6), whereby the inside of the supporting framework (3) is provided with a layer which separates the dumpable material from the material suitable for the growth of plants (10) and/or that the supporting framework (3) with the hollow-bodies is imbedded inside and out in a layer made of sound absorbing and/or heat insulating or conducting material.

27. Protective structure according to claim 26, characterized in that the cavities on both sides of the formwork are filled with dumpable material of different kinds and this with sound absorbing material on the side of the structure exposed to noise.

28. Protective structure according to one of the claims 1 to 27, characterized in that to at least one supporting framework (3) several flat drawn tire sectors (4) are attached.

29. Protective structure according to claim 28, characterized in that the supporting frame work (3) consists of horizontally and/or vertically running skis (92, 93, 94).

30. Protective structure according to one of the claims 1 to 29, characterized in that on at least one lining element (2) hollow bodies are cast into a hardenable material of the supporting framework (2).

31. Protective structure according to one of the claims 1 to 30, characterized in that on the inner side and/or on the outer side of the hollow bodies coatings (42) in form of a perforated layer of sound absorbing and also thermally insulating or heat conducting material and/or perforated sheetings or mattings and/or scrap facade nettings in at least one layer to increase the absorption of sound are provided.

32. Protective structure according to one of the claims 1 to 31, characterized in that on at least one lining element (2) the upper tire walls of the topmost tire sectors (4) are removed.

33. Protective structure according to one of the claims 4 to 32, characterized in that at least two layers of tire sectors (4) are provided on at least one lining element (2), whereby the treads of one layer face in a direction opposite to an other layer.

34. Protective structure according to one of the claims 4 to 33, characterized in that the rim section of at least several tire sectors (4) is removed, so that only the treads, where appropriate with the adjoining wall areas, are attached to the supporting frameworks (3).

35. Protective structure according to one of the claims 1 to 34, characterized in that at least one supporting framework (3) has a contouring (46) which fits into matching contouring of a reinforcement element (9) of the underpinning (6) and/or of another supporting framework (3) and/or in a mounting ledge.

36. Protective structure according to one of the claims 1 to 35, characterized in that the supporting frameworks (3) of the lining elements (2) have reinforced contoured rods of recycled plastic.

37. Protective structure according to one of the claims 1 to 36, characterized in that at least several lining elements (2) and/or the underpinning (6) has a steel reinforcement provided with a corrosion protection.

38. Protective structure according to one of the claims 1 to 37, characterized in that the dumpable material contains scrap steel, scrap plastics reduced in size, foamed materials, pressed conglutinated straw, glass fibre mat pieces, compost, sewage sludge, semiliquid manure, blast-furnace slag, cellulose wastes, track ballast, wood pellets, clay balls, sand, gravel, grass, brushwood, chippings, scrap paper or cardboard, powdered rock, lime, size-reduced refuse, extrusive rocks, ashes, synthetic or natural fibers, excavated soil, residual wast concrete, material excavated in tunnel building or construction debris.

39. Protective structure according to claim 38, characterized in that the dumpable material contains additives of growth stimulants, moisture retaining materials, anti-corrosion agents or antirot agents, whereby an impermeable layer enables the contaminated dumpable material to be kept separate from the non-contaminated dumpable material.

40. Protective structure according to one of the claims 1 to 39, characterized in that the problematic materials in the reinforcement elements (9) of the underpinning (6) and/or in the supporting frameworks (3) and/or in the connecting elements (8) are rails (59), railroad ties, trapezoidal sheet metal, sheet pilings, counterrails, sections of track (58) (with the rails connected to the ties and positioned horizontally or vertically), plastic sections of recycled plastic, sports articles, namely skis (92, 93, 94), surfboards, tennis rackets, wooden parts, namely telegraph or power poles or scrap wood, die-pressed leather and aluminum waste, hollow cast building components, sections of glass mattings, steel ropes, chopped and conglutinated straw, synthetic-resin bound foamed materials and/or plastic wastes and/or dust and/or sludge, corrugated roofing elements or interconnected tire sectors, whereby materials susceptible to corrosion are impregnated with an anti-corrosive agent and/or coated by an anti-corrosive material.

41. Protective structure according to claim 40, characterized in that the components used for the reinforcement elements (9) or the supporting frameworks (3) or the connecting elements (8) or as hollow bodies have inscriptions (54) on them which are positioned facing the outside of the protective structure (1) or are placed on this outer surface.

42. Protective structure according to one of the claims 1 to 41, characterized in that it has pipes (65) inside it, imbedded in the dumpable material (97) or inside a facing shell (81) made of hollow bodies, which in turn are imbedded in a layer (82) of thermally conductive and highly absorbent material to utilize solar and/or geothermal energy.

43. Protective structure according to one of the claims 1 to 42, characterized in that it has additional sound absorbing elements (66) in form of sheet metals (67) with trapezoidal corrugations, which are attached bent at an angle to the top of the protective structure, whereby the horizontal part of the trapezoidal sheet metals forms a distribution channel (68) for irrigating the structure, and the oblique underside of the top part is provided on its bottom side with sound absorbing material (69) to provide further noise insulation.

44. Protective structure according to claim 43, characterized in that hoses (70) are connected to the distribution channel (68) and are used to supply water to the lower sections of the protective structure (1).

45. Protective structure according to one of the claims 1 to 44, characterized in that the hollow bodies are attached to sound absorbing panels (72).

46. Protective structure according to one of the claims 1 to 45, characterized in that the underpinning (6) in the shape of an upwardly directed extension (49) of an already existing underpinning (6), forms a sound interceptor provided with absorbent material and/or forms a roofing of roadway areas, or a substructure for a sound interceptor or roofing.

47. Protective structure according to claim 46, characterized in that the sound interceptor and/or the roofing comprises scrap panels, the absorbing material comprising perforated cans filled with sound absorbent materials.

48. Protective structure according to one of the claims 1 to 47, characterized in that it has supply and/or waste disposal lines within it imbedded in the dumpable material.

49. Protective structure according to one of the claims 1 to 48, characterized in that it has aeration lines (73) to feed air to the problematic materials and/or to the material suitable for the growth of plants (10) to which aeration lines (73) exhaust from traffic routes is supplied.

50. Protective structure according to one of the claims 1 to 49, characterized in that the plants (10) are placed in material suitable for their growth in pots (60) or ski boots (86) or ski boot sections or food cups (91), whereby the pots (60) consist of corrosion-resistant problematic material.

51. Protective structure according to claim 50, characterized in that pots (60) or food cups (91) with cuts in their sides are hold together at their top by elastic bands (64).

52. Protective structure according to claim 50 or 51, characterized in that the pots (60), ski boots (86) or ski boot sections are placed in planting holes such that their top rim projects above the planting hole.

53. Protective structure according to one of the claims 1 to 52, characterized in that the plants (10) are placed in containers which are interchangeably positioned in the protective structure (1).

54. Protective structure according to one of the claims 1 to 53, characterized in that the surfaces of the protective structure (1) have a cover and/or a coating (53) in form of at least one net and/or mat (39) and/or a sheeting material, whereby this cover has a removable printing (55) and/or painting.

55. Protective structure according to claim 46, characterized in that between the cover and the surface of the protective structure (1) additional sound absorbing material, namely plastics foam, chopped straw, granulates, size-reduced plastics waste or the like is filled in and/or that a sound reflecting layer is placed on the backside of the cover.

56. Protective structure according to one of the claims 1 to 55, characterized in that it contains irrigation lines (74) made of scrap material, namely recycled plastic, hoses discarded by the fire department or sheet metal with trapezoidal corrugations.

57. Protective structure according to one of the claims 1 to 56, characterized in that it has in its interior at least one water container (75), to which water container (75) a pump to feed in rain water from areas located outside the protective structure (1) is associated.

58. Protective structure according to claim 57, characterized in that the pump is combined with a filter device for cleaning the water.

59. Protective structure according to one of the claims 1 to 58, characterized in that it contains within its interior feeder lines for soil moisture.

60. Protective structure according to one of the claims 1 to 59, characterized in that it carries advertising areas or advertising installations, so that the plants (10) can cover them, and/or waming installations and/or surveillance installations.

61. Protective structure according to one of the claims 1 to 60, characterized in that at least several lining elements (2) and/or several sections of the covers on the outside are rendered in colour and/or illuminated and/or by suitable arrangement form symbols (55), which function as advertising.

62. Protective structure according to claim 61, characterized in that the symbols (55) are so disposed that they can be covered as the plants (10) continue to grow.

63. Protective structure according to one of the claims 1 to 62, characterized in that it carries at least one installation for producing solar energy, namely solar panels (77), to supply power to electrically driven advertising and/or irrigation installations and/or a water pump driven by a wind wheel.

64. Protective structure according to one of the claims 1 to 63, characterized in that glass walls (57) and/or sound absorbing windows (56) are installed within it.

65. Protective structure according to one of the claims 1 to 64, characterized in that also the material suitable for the growth of plants (10) contains suitable problematic materials, namely compost, garbage compost, manure, blast-fumace slag, cellulose fibers, sewage sludge or particles of foamed materials.

66. Process for the production of a protective structure according to one of the claims 1 to 65, characterized in that at least parts of the protective structure (1), namely, facing shells (81) provided with supporting frameworks (3), are delivered in a pre-fabricated condition to the site of installation.

67. Process according to claim 66, characterized in that entire elements of the protective structure (1) are filled with soil, are fitted with plants and are transported to the site with the plants already being green.

## Revendications

1. Structure de protection (1), qui comprend à chacune de ses deux côtés au moins un élément de parement (2), qui possède une ossature support (3), à laquelle des corps creux, au moins unilatéralement ouverts, sont montés, au moins quelques-uns des espaces vides formés de ces corps creux contenant au moins une matière propre à la croissance d'une végétation (10), et un appui (6), qui repose au sol ou est lié au sol, étant prévu pour et disposé entre les éléments de parement (2) aux deux côtés, dont la largeur maximale, mesurée normalement au plan de la structure, est plus grande que la profondeur d'un élément de parement (2), mesurée en même sens, cet appui (6) consistant au moins partiellement d'une matière en vrac, caractérisée en ce qu'au moins la matière en vrac de l'appui (6) contient au moins une matière problématique, et que dans l'appui (6) des éléments de raccord (8) pour les éléments de parement (2) aux deux côtés sont disposés noyés dans la matière en vrac et reliés aux éléments de parement (2) de manière que les éléments de parement (2) aux deux côtés sont reliés à l'effort de traction au moins dans la zone du sol de la structure de protection (1), les éléments de raccord (8) et/ou les éléments de parement (2) contenants de matière problématique différente des pneus de récupération et pas modifiée ou substantiellement pas modifiée de l'état rigide de sa procréation.

2. Structure de protection (1) susceptible d'être plantée au moins unilatéralement et pourvue d'au moins un élément de parement (2) à au moins une côté d'un appui (6) rigide relié au sol (7), ledit élément comprenant une ossature support (3), à laquelle des corps creux, au moins unilatéralement ouverts, sont montés, au moins quelques-uns des espaces vides formés de ces corps creux contenant au moins une matière propre à la croissance d'une végétation (10), caractérisée en ce qu'au moins dans la zone basse de l'appui (6) les éléments des parement sont espacés de l'appui (6), et que l'espace intermédiaire demeurant est comblé d'une matière en vrac, ladite matière en vrac contenant au moins une matière problématique, et en ce que des éléments de raccord (8) sont noyés dans la matière en vrac, à lesquels, au moins dans la zone basse de l'appui (6), au moins la région basse d'un élément de parement (2) est relié à l'effort de traction à l'appui (6), les éléments de raccord (9) et/ou les éléments de parement (2) contenants de matière problématique différente des pneus de récupération et pas modifiée ou substantiellement pas modifiée de l'état rigide de sa procréation.

3. Structure de protection selon la revendication 1 ou 2, caractérisée en ce que l'appui (6) contient conjointement une structure existante, une pente, un talus (16), un remblai antibruit ou paravent anti-érosion ou une berge de rive, des espaces vides (9') demeurants étant comblés d'un matériau de matière problématique et/ou des déblais de la structure existante, et que le raccordement de la structure de protection est fait par des tirants d'ancrage.

4. Structure de protection selon une des revendications 1 à 3, caractérisée en ce que les corps creux sont formés par des secteurs de pneu (4) et/ou des boîtes (83) et/ou des bottines de skieur (86).

5. Structure de protection selon la revendication 4, caractérisée en ce que les corps creux sont poinçonnés.

6. Structure de protection selon la revendication 5, caractérisée en ce que des secteurs de pneu (4) sont poinçonnés aux flancs latéraux.

7. Structure de protection selon une des revendications 1 à 6, caractérisée en ce que la matière problématique des éléments de raccord (8) et/ou des éléments de parement (2) est formée par des skis (92,93,94), des bottines de skieur (86) ou des boîtes (83).

8. Structure de protection selon une des revendications 1 à 7, caractérisée en ce que l'appui (6) comprend des périphéries inclinées par rapport à la horizontale et tournées vers les éléments de parement, et en ce que les éléments de parement (2) sont aussi disposés d'une manière inclinée.

9. Structure de protection selon une des revendications 1 à 8, caractérisée en ce qu'elle forme un rehaussement (14) d'une structure existante.

10. Structure de protection selon une des revendications 1 à 9, caractérisée en ce que les éléments de parement (2) sont disposés aux deux côtés de l'appui (6) aux niveaux différents.

11. Structure de protection selon une des revendications 1 à 10, caractérisée en ce que son profil en travers est de forme échelonnée, les régions de surfaces (23) tournées vers le haut formant des surfaces agricoles.

12. Structure de protection selon la revendication 11, caractérisée en ce que les éléments de parement (2) comprennent des ossatures support (3) non soutenues superposées et reliées l'une à l'autre, qui sont disposées en forme échelonnée et/ou sont pourvues des corps creux de grandeur différente, cette grandeur différente, en cas des secteurs de pneu (4), étant obtenue par l'utilisation de pneus de récupération de dimensions différentes et/ou par des angles de secteur différents des secteurs de pneu (4).

13. Structure de protection selon une des revendications 1 à 12, caractérisée en ce que les corps creux des éléments de parement (2) contiennent au moins une matière problématique du type mentionné dans la revendication 1.

14. Structure de protection selon la revendication 13, caractérisée en ce que les corps creux portent des informations, qui sont tournées vers extérieur de la structure de protection (1), l'intérieur des corps creux contenant au moins un matériau à absorption acoustique (66).

15. Structure de protection selon une des revendications 1 à 14, caractérisée en ce que l'appui (6) contient des éléments de renfort (9) rigides, qui consistent d'une matière problématique du type mentionné dans la revendication 1.

16. Structure de protection selon la revendication 15, caractérisée en ce que les éléments de renfort (9) rigides raccordent les éléments de parement (2) disposés aux deux côtés de la structure de protection (1) d'une manière résistante à la pression.

17. Structure de protection selon la revendication 15 ou 16, caractérisée en ce que les éléments de renfort (9) comprennent des supports verticaux ancrés dans le sol (7), existants et/ou pilotés dans le sol.

18. Structure de protection selon une des revendications 15 à 17, caractérisée en ce que les éléments de renfort (9) forment une charpente rigide en forme de cadre ou d'un A, à laquelle des éléments d'ancrage (25) à poser dans le sol sont fixés.

19. Structure de protection selon une des revendications 15 à 18, caractérisée en ce que les éléments de renfort (9) comprennent des listeaux de montage (26) en forme des rails à profile (27) s'étendant horizontalement ou verticalement et parallèlement l'un à l'autre, entre lesquels les ossatures support (3) des éléments de parement (2) d'un profil (28), qui correspond au profil (27) des listeaux de montage (26), sont insérés.

20. Structure de protection selon une des revendications 15 à 19, caractérisée en ce que l'appui (6) contient des espaces vides (5) entre les éléments de renfort (9), qui sont comblés par la matière en vrac, qui contient au moins une matière problématique.

21. Structure de protection selon une des revendications 1 à 20, caractérisée en ce que des connections d'emboîtement (29) sont prévues pour le raccordement des éléments de renfort (9) rigides l'un à l'autre et/ou pour le fixage des corps creux aux ossatures support (3) et/ou pour la fixation des éléments de parement (2) à l'appui (6) et/ou pour l'attache de la structure de protection (1) à rehausser.

22. Structure de protection selon une des revendications 1 à 21, caractérisée en ce que des chevilles, des clavettes (31), des clameaux ou des rivets résistants à la corrosion servent à relier les éléments de renfort (9) et/ou les corps creux à l'ossature support (3).

23. Structure de protection selon une des revendications 1 à 22, caractérisée en ce qu'un cuvelage (35) d'un matériau étanche et résistant à la corrosion se trouve sous l'appui (6), dont les parties s'étendant en sens longitudinal de la structure de protection (1) sont étanchées aux joints ou raccords à l'appui (6) par un profilé.

24. Structure de protection selon une des revendications 1 à 23, caractérisée en ce que des moyens de fixation résistants à la corrosion sont scellés dans le matériau des ossatures support (3) ou de l'appui (6) ou des éléments de raccord (8) pour fixer les corps creux et/ou les ossatures support (3) à l'appui (6) et/ou aux éléments de raccord (9), et que des moyens de détente pour les éléments de construction fixés sont prévus aux dits moyens de fixation, à savoir des goupilles ou des replis de boulon.

25. Structure de protection selon une des revendications 1 à 24, caractérisée en ce que les ossatures support (3) comprennent des supports verticaux (37), à lesquels les corps creux pourvus des ouvertures (38) sont rapportés, les ouvertures (38) étant plus grandes que la section des supports verticaux (37).

26. Structure de protection selon une des revendications 1 à 25, caractérisée en ce que les ossatures support (3) des éléments de parement (2) forment un coffrage pour la matière en vrac de l'appui (6), l'intérieur de l'ossature support (3) étant pourvu d'une couche séparant la matière en vrac de la matière, qui serve à la croissance de végétation (10) et/ou que l'ossature support (3) conjointement avec les corps creux est noyée extérieurement et intérieurement dans une couche de matériau à absorption acoustique et/ou à isolation thermique ou thermoconducteur.

27. Structure de protection selon la revendication 26, caractérisée en ce que les espaces vides situés aux deux côtés du coffrage sont comblés de la matière en vrac de nature différente, à savoir à la côté de son de la structure de matériau à absorption acoustique.

28. Structure de protection selon une des revendications 1 à 27, caractérisée en ce que plusieurs secteurs de pneu (4) tirés en forme plate sont fixés à au moins une ossature support (3).

29. Structure de protection selon la revendication 28, caractérisée en ce que l'ossature support (3) consiste de skis (92,93,94) s'étendants horizontalement et/ou verticalement.

30. Structure de protection selon une des revendications 1 à 29, caractérisée en ce que des corps creux d'au moins un élément de parement (2) sont scellés dans un matériau durcissable de l'ossature support (2).

31. Structure de protection selon une des revendications 1 à 30, caractérisée en ce que des enductions (42) en forme d'une couche perforée de matériau à absorption acoustique et à isolation thermique ou thermoconducteur à la fois et/ou des feuilles et/ou des non-tissés, qui sont pourvus d'une perforation, et/ou au moins une couche de filets de façade usagés sont prévus pour augmenter l'absorption acoustique.

32. Structure de protection selon une des revendications 4 à 31, caractérisée en ce que les flancs de pneu situés en haut des secteurs de pneu (4) sont écartés à au moins un élément de parement (2).

33. Structure de protection selon une des revendications 4 à 32, caractérisée en ce qu'au moins deux couchis de secteurs de pneu (4) sont prévus à au moins un élément de parement (2) dont les chapes sont tournées en sens différents.

34. Structure de protection selon une des revendications 4 à 33, caractérisée en ce que les régions de jante d'au moins quelques secteurs de pneu (4) sont écartées de manière que seulement les régions de chape sont fixées aux ossatures support (3), le cas échéant avec les régions de flanc voisines.

35. Structure de protection selon une des revendications 1 à 34, caractérisée en ce qu'au moins une ossature support (3) comprend un profilage (46), qui s'ajuste dans un profilage correspondant d'un élément de renfort (9) de l'appui (6) et/ou d'une autre ossature support (3) et/ou dans un listeau de montage.

36. Structure de protection selon une des revendications 1 à 35, caractérisée en ce que les ossatures support (3) des éléments de parement (2) comprennent des profilés armés en matière plastique recyclée.

37. Structure de protection selon une des revendications 1 à 36, caractérisée en ce qu'au moins quelques éléments de parement (2) et/ou l'appui comprennent un renforcement en acier, qui est prévu d'une protection anticorrosive.

38. Structure de protection selon une des revendications 1 à 37, caractérisée en ce que la matière en vrac contient des chutes d'acier, des déchets de matière plastique en forme déchiquetée, des produits alvéolaires, de la paille comprimée et collée, des morceaux de fils de verre non-tissés, du compost, des boues de curage, du lisier, du laitier du haut fourneau, des déchets de pâte, du ballast de voie, des copeaux de bois, des boules d'argile, de sable, de gravier, des herbes, des buissons, de la matière hachée, des déchets de papier ou de carton, de la roche pulvérisée, du limon, des ordures déchiquetées, des roches volcaniques, des cendres, des fibres synthétiques ou naturelles, des matériaux de décombres, des décombres de béton de reste, de la fouille de tunnel ou des gravois.

39. Structure de protection selon la revendication 38, caractérisée en ce que la matière en vrac contient des additifs d'amélioration de croissance pour le gazonnage, des agents à accumulation de humidité, des agents anticorrosifs ou des agents imputrescibles, une couche étanche étant prévue pour la séparation de la matière en vrac sale et de la matière en vrac propre.

40. Structure de protection selon une des revendications 1 à 39, caractérisée en ce que des rails (59), des traverses de chemin de fer, des tôles à ondes trapézoïdales, des cloisons de palplanches, des contre-rails, des parties de vois (58) (des traverses de chemin de fer liées aux rails, qui sont disposée horizontalement ou verticalement), des profilés de matière plastique en matière plastique recyclée, des articles de sport, à savoir des skis (92,93,94), des surf boards, des raquettes, des morceaux de bois, à savoir des poteaux télégraphiques ou de courant ou des déchets de bois, des déchets de cuir et d'aluminium pressés en forme, des éléments creux et remplis, des morceaux de fils de verre non-tissés, des câbles en acier, de la paille comprimée et fixée avec un adhésif, des produits alvéolaires fixés avec des résines et/ou des déchets de matière plastique et/ou de poussière et/ou de boues, des éléments de couverture ondulés ou des secteurs de pneu liés servent comme matière problématique dans les éléments de renfort (9) de l'appui (6) et/ou dans les ossatures support (3) et/ou dans les éléments de raccord, des matériaux sensibles à la corrosion étant prévus d'une imprégnation anticorrosive et/ou d'un enrobage.

41. Structure de protection selon la revendication 40, caractérisée en ce que les éléments utilisés pour les éléments de renfort (9) et/ou les ossatures support (3) et/ou les éléments de raccord (8) et/ou les corps creux portent des informations (54), qui sont tournées vers extérieur de la structure de protection (1) ou sont situées à cet extérieur.

42. Structure de protection selon une des revendications 1 à 41, caractérisée en ce qu'elle comprend des tuyaux (65) pour l'exploitation de la chaleur du soleil ou du sol noyés dans son intérieur dans la matière en vrac (97) et/ou dans l'intérieur d'une coque (81) préfixée de corps creux, qui sont noyés dans une couche (82) de matériau à conductibilité thermique ou à grande absorption.

43. Structure de protection selon une des revendications 1 à 42, caractérisée en ce qu'elle comprend des éléments à absorption acoustique (66) additionnels en forme des tôles à ondes trapézoïdales (67), qui sont fixées de manière pliée à la surface supérieure de la structure de protection, la partie horizontale des tôles à ondes trapézoïdales formante un échenal de distribution (68) perforé en bas et/ou latéralement pour l'arrosage de la structure, et la partie supérieure inclinée étant pourvue du matériau à absorption acoustique (6) en bas comme protection acoustique additionnelle.

44. Structure de protection selon la revendication 43, caractérisée en ce qu'au échenal de distribution (68) des tuyaux flexibles (70) sont raccordés, qui servent à l'alimentation en eau aux parties inférieures de la structure de protection (1).

45. Structure de protection selon une des revendications 1 à 44, caractérisée en ce que les corps creux sont liés à des panneaux de protection acoustique (72).

46. Structure de protection selon une des revendications 1 à 45, caractérisée en ce que l'appui (6) en forme d'une prolongation (49) d'un appui (6) existant dirigée vers le haut forme une barrière acoustique pourvue d'un matériau absorbant et/ou un recouvrement de zones d'une piste de roulage ou une fondation pour celles-ci.

47. Structure de protection selon la revendication 46, caractérisée en ce que la barrière acoustique et/ou le recouvrement comprend des panneaux usagés, le matériau absorbant comprenant des boîtes perforées remplies de matériau à absorption acoustique.

48. Structure de protection selon une des revendications 1 à 47, caractérisée en ce qu'elle comprend dans l'intérieur des conduits d'alimentation et/ou d'évacuation noyés dans la matière en vrac.

49. Structure de protection selon une des revendications 1 à 48, caractérisée en ce qu'elle comprend des conduits d'aération (73) pour l'alimentation en air aux matières problématiques et/ou à la matière propre à la croissance de végétation (10), l'air d'échappement de voirie étant alimenté aux conduits d'aération (73).

50. Structure de protection selon une des revendications 1 à 49, caractérisée en ce que les plantes (10) sont placés dans la matière propre à sa croissance dans des pots (60) et/ou des bottines de skieur (86) et/ou des tronçons de bottines de skieur et/ou des coupes d'aliment, les pots (60) consistants de matière problématique résistante à la corrosion.

51. Structure de protection selon la revendication 50, caractérisée en ce que des pots (60) et/ou des coupes d'aliment (91) coupés latéralement sont tenus ensemble à la partie supérieur par des rubans élastiques (64) .

52. Structure de protection selon la revendication 50 ou 51, caractérisée en ce que les pots (60), les bottines de skieur (86) ou les tronçons de bottines de skieur sont placés dans des poquets, leur bord supérieur débordant au-dessus du poquet.

53. Structure de protection selon une des revendications 1 à 52, caractérisée en ce que les plantes (10) sont placés dans des récipients, qui sont placés d'une manière échangeable dans la structure de protection (1).

54. Structure de protection selon une des revendications 1 à 53, caractérisée en ce que les surfaces de la structure de protection (1) sont pourvues d'un recouvrement et/ou d'une couche (53) en forme d'au moins d'un filet et/ou d'un non-tissé (39) et/ou d'un matériau en feuille, ledit recouvrement étant pourvue d'une impression et/ou peinture susceptible d'être enlevée (55).

55. Structure de protection selon la revendication 54, caractérisée en ce que de matériau à absorption acoustique additionnel, à savoir de la matière plastique moussée, de la paille fragmentée, des granulés ou des déchets de matière plastique déchiquetée, est rempli entre le recouvrement et la surface de la structure de protection (1) et/ou une couche à réflexion du son est placée au revers du recouvrement.

56. Structure de protection selon une des revendications 1 à 55, caractérisée en ce qu'elle contient des conduits d'arrosage (74) d'un produit de récupération, à savoir de la matière plastique recyclée, des manches à incendie usagées ou des tôles à ondes trapézoïdales.

57. Structure de protection selon une des revendications 1 à 56, caractérisée en ce qu'elle comprend dans l'intérieur au moins un récipient d'eau (75), une pompe pour l'alimentation en eau de pluie des zones superficielles situées extérieurement de la structure de protection (1) étant associée au récipient d'eau (75).

58. Structure de protection selon la revendication 57, caractérisée en ce que la pompe est combinée avec une installation de filtrage pour purifier l'eau.

59. Structure de protection selon une des revendications 1 à 58, caractérisée en ce qu'elle comprend dans l'intérieur des conduits d'alimentation en humidité de terre.

60. Structure de protection selon une des revendications 1 à 59, caractérisée en ce qu'elle porte des faces ou installations publicitaires disposées de manière à être recouvertes de végétation (10) et/ou des installations d'avertissement et/ou des installations de surveillance.

61. Structure de protection selon une des revendications 1 à 60, caractérisée en ce qu'au moins quelques des éléments de parement (2) et/ou quelques parties des recouvrements sont formés en couleurs et/ou illuminés à l'extérieur et/ou forment des signes (55) par une disposition appropriée, qui forment de publicité.

62. Structure de protection selon la revendication 61, caractérisée en ce que les signes (55) sont disposés de manière à être recouvris de végétation (10).

63. Structure de protection selon une des revendications 1 à 62, caractérisée en ce qu'elle porte au moins un agrégat pour la production d'énergie solaire, à savoir des panneaux solaire (77), pour alimenter des installations de publicité et/ou d'arrosage opérées électriquement en courant et/ou une pompe à eau actionnée d'une éolienne.

64. Structure de protection selon une des revendications 1 à 63, caractérisée en ce que des parois de verre (57) et/ou des fenêtres de protection contre les bruits (56) sont installés.

65. Structure de protection selon une des revendications 1 à 64, caractérisée en ce que la matière propre à la croissance de la végétation (10) aussi contient de la matière problématique, à savoir du compost, du compost d'ordures, du lisier, du laitier du haut fourneau, des fibres de pâte, des boues ou des particules de produits alvéolaires.

66. Procédé de fabrication d'une structure de protection selon une des revendications 1 à 65, caractérisée en ce qu'au moins des tronçons de la structure de protection (1), à savoir des coques (81) préfixées pourvues d'ossatures support (3), sont fournis en état prêt à la place de montage.

67. Procédé selon la revendication 66, caractérisée en ce que des éléments entiers de la structure de protection (1) sont remplis de terre, pourvus de plantes et transportée en état gazonné au site.
